# EUROPEAN PATENT APPLICATION

(11) **EP 4 790 997 A1**
(43) Date of publication of application: **12.08.2026**
(21) Application number: 24874994.7
(22) Date of filing: 04.10.2024
(51) Int. Cl.: H04N 19/593, H04N 19/159, H04N 19/105, H04N 19/70

(54) **MIP-BASED IMAGE ENCODING/DECODING METHOD, METHOD FOR TRANSMITTING BITSTREAM, AND RECORDING MEDIUM HAVING BITSTREAM STORED THEREIN**

(30) Priority: 05.10.2023 US 202363542529 P
(71) Applicant: LG Electronics Inc., Yeongdeungpo-gu Seoul 07336 (KR)
(72) Inventor: CHOI, Jangwon, Seoul 06772 (KR); KIM, Seung Hwan, Seoul 06772 (KR); LIM, Jaehyun, Seoul 06772 (KR); HONG, Myungoh, Seoul 06772 (KR)
(74) Representative: Mooser, Sebastian Thomas
(86) International application number: PCT/KR2024/015105
(87) International publication number: WO 2025/075438

(57) **Abstract**

According to the present disclosure, provided are an MIP-based image encoding/decoding method, a method for transmitting a bitstream, and a recording medium having a bitstream stored therein. The image decoding method according to the present disclosure comprises the steps of: determining a prediction mode of the current block; and on the basis that the prediction mode is an intra prediction mode, deriving information related to matrix-based intra prediction (MIP), wherein the MIP may be applied on the basis of the size of the current block or the number of pixels included in the current block.

## Description

### [Technical Field]

The present disclosure relates to an MIP-based image encoding/decoding method, a method for transmitting a bitstream and a recording medium for storing a bitstream, and more specifically, relates to a matrix-based intra prediction(MIP)-based image encoding/decoding method using only a part of reference samples, a method for transmitting a bitstream and a recording medium for storing a bitstream.

### [Background Art]

Recently, the demand for high-resolution and high-quality images, such as High Definition (HD) images and Ultra High Definition (UHD) images, has been increasing in various fields. As image data becomes high-resolution and high-quality, the amount of transmitted information or bit rate increases relative to conventional image data. The increase in transmitted information or bit rate amount leads to an increase in transmission costs and storage costs.

Accordingly, a high-efficiency image compression technology is required to effectively transmit, store, and reproduce the information of high-resolution and high-quality images.

### [Disclosure]

### [Technical Problem]

The present disclosure is to provide an image encoding/decoding method and apparatus with improved encoding/decoding efficiency.

In addition, the present disclosure is to provide an image encoding/decoding method and apparatus based on intra prediction and some selected reference samples.

In addition, the present disclosure is to provide an image encoding/decoding method and apparatus with improved intra prediction efficiency.

In addition, the present disclosure is to provide an image encoding/decoding method and apparatus that may adaptively perform intra prediction according to the size of a current block or a reference sample, etc. when performing intra prediction.

In addition, the present disclosure is to provide a non-transitory computer-readable recording medium for storing a bitstream generated by the image encoding method or apparatus according to the present disclosure.

In addition, the present disclosure is to provide a non-transitory computer-readable recording medium for storing a bitstream which is received and decoded by the image decoding apparatus according to the present disclosure and used for image reconstruction.

In addition, the present disclosure is to provide a method for transmitting a bitstream which is generated by the image encoding method or apparatus according to the present disclosure.

The technical problems to be achieved in the present disclosure are not limited to the technical problems described above, and other technical problems not described may be clearly understood by those of ordinary skill in the art from the following descriptions.

### [Technical Solution]

An image decoding method according to an aspect of the present disclosure
includes determining a prediction mode of a current block and based on the prediction mode being an intra prediction mode, deriving information related to matrix-based intra prediction (MIP), wherein the MIP may be applied based on a size of the current block or the number of pixels included in the current block.

Meanwhile, as an example, a matrix for the MIP may be determined based on the size of the current block or the number of pixels included in the current block.

Meanwhile, as an example, when it is determined that the MIP is applied to the current block based on the information related to the MIP, a value of a prediction block of the current block may be limited to a specific value based on a specific condition.

Meanwhile, as an example, the specific condition may be based on a reference sample value of the current block for the MIP.

Meanwhile, as an example, when the specific condition is satisfied, application of the MIP to the current block may be omitted regardless of the information related to the MIP.

Meanwhile, as an example, when it is determined that the MIP is applied to the current block based on the information related to the MIP, a prediction block of the current block may be generated by using only a top reference sample of the current block.

Meanwhile, as an example, a top-right reference sample of the current block may be included in the top reference sample.

Meanwhile, as an example, when it is determined that the MIP is applied to the current block based on the information related to the MIP, a prediction block of the current block may be generated by using only a left reference sample of the current block.

Meanwhile, as an example, a bottom-left reference sample of the current block may be included in the left reference sample.

Meanwhile, as an example, a prediction block of the current block is generated by using a part of the top reference sample and the left reference sample of the current block, but at least one of the left reference sample or the top reference sample may be partially adjacent to the current block.

Meanwhile, as an example, when it is determined that the MIP is applied to the current block based on the information related to the MIP, a position of a reference sample of the current block is determined, but the position of the reference sample of the current block may be derived based on information signaled from a bitstream.

An image encoding method according to an aspect of the present disclosure includes determining whether to apply matrix-based intra prediction (MIP) to a current block and determining information related to the MIP, wherein the MIP may be applied based on a size of the current block or the number of pixels included in the current block.

A computer-readable recording medium according to another aspect of the present disclosure may store a bitstream generated by the image encoding method or the image encoding apparatus of the present disclosure.

A transmission method according to another aspect of the present disclosure may transmit a bitstream generated by the image encoding apparatus or the image encoding method of the present disclosure.

The features of the present disclosure briefly summarized above are merely exemplary embodiments described in detail below and are not intended to limit the range of the present disclosure.

### [Advantageous Effects]

According to the present disclosure, an image encoding/decoding method and apparatus with improved encoding/decoding efficiency may be provided.

In addition, according to the present disclosure, an image encoding/decoding method and apparatus based on intra prediction and some selected reference samples may be provided.

In addition, according to the present disclosure, coding efficiency and quality may be improved by adaptively performing intra prediction according to the size of a current block or a reference sample, etc. when performing intra prediction.

In addition, according to the present disclosure, an image encoding/decoding method and apparatus that may generate an adaptive intra prediction block to a reference sample area and/or the size/number of pixels of a current block, etc. during intra prediction may be provided.

In addition, according to the present disclosure, an image encoding/decoding method and apparatus with improved intra prediction efficiency may be provided.

In addition, according to the present disclosure, a non-transitory computer-readable recording medium for storing a bitstream generated by the image encoding method or apparatus according to the present disclosure may be provided.

In addition, according to the present disclosure, a non-transitory computer-readable recording medium for storing a bitstream which is received and decoded by the image decoding apparatus according to the present disclosure and used for image reconstruction may be provided.

In addition, according to the present disclosure, a method of transmitting a bitstream generated by the image encoding method or apparatus according to the present disclosure may be provided.

The effects obtainable from the present disclosure are not limited to the effects described above, and other effects not described may be clearly understood by those of ordinary skill in the art from the following descriptions.

### [Description of Drawings]

FIG. 1 shows a schematic diagram of a video coding system to which an embodiment according to the present disclosure may be applied.
FIG. 2 shows a schematic diagram of an image encoding apparatus to which an embodiment according to the present disclosure may be applied.
FIG. 3 shows a schematic diagram of an image decoding apparatus to which an embodiment according to the present disclosure may be applied.
FIG. 4 shows a flowchart of an example of an intra prediction mode signaling method in an encoding apparatus.
FIG. 5 shows a flowchart of an example of an intra prediction mode determination method in a decoding apparatus.
FIG. 6 shows a diagram of an example of neighboring blocks used for deriving an MPM list.
FIGS. 7 to 11 are a diagram representing an example of the overall process of averaging, matrix vector multiplication and linear interpolation that may be applied to the present disclosure.
FIG. 12 is a diagram representing an example of a boundary averaging process that may be applied to the present disclosure.
FIG. 13 is a diagram representing an example of a linear interpolation process that may be applied to the present disclosure.
FIG. 14 is a diagram for describing an MIP prediction method that may be applied to the present disclosure.
FIG. 15 is a diagram for
   describing a method for performing MIP prediction according to an embodiment of the present disclosure.
FIG. 16 is a diagram for describing an MIP-based image encoding or decoding method according to an embodiment of the present disclosure.
FIG. 17 is a diagram for describing an MIP prediction method that may be applied to the present disclosure.
FIG. 18 is a diagram for describing a method for performing MIP prediction according to an embodiment of the present disclosure.
FIGS. 19a and 19b are a diagram for describing an MIP-based image encoding or decoding method according to an embodiment of the present disclosure.
FIG. 20 is a diagram for describing an MIP prediction method that may be applied to the present disclosure.
FIG. 21 is a diagram for
   describing a method for performing MIP prediction according to an embodiment of the present disclosure.
FIG. 22 is a diagram for describing an MIP-based image encoding or decoding method according to an embodiment of the present disclosure.
FIG. 23 is a diagram for describing an MIP-based image encoding or decoding method according to an embodiment of the present disclosure.
FIG. 24 is a diagram for describing an MIP-based image encoding or decoding method according to an embodiment of the present disclosure.
FIG. 25 is a diagram representing an image decoding method according to an embodiment of the present disclosure.
FIG. 26 is a diagram representing an image encoding method according to an embodiment of the present disclosure.
FIG. 27 shows an exemplary diagram of a content streaming system to which an embodiment of the present disclosure may be applied.

### [Mode for Invention]

Hereinafter, embodiments of the present disclosure will be described in detail by referring to the attached drawings for those of ordinary skill in the art to easily implement them. However, the present disclosure may be implemented in various different forms and is not limited to the embodiments described herein.

In describing embodiments of the present disclosure, detailed explanations of well-known configurations or functions are omitted when they are deemed to obscure the main point of the present disclosure. Additionally, parts irrelevant to the description of the present disclosure are omitted from the drawings, and similar drawing symbol have been assigned to similar parts.

In the present disclosure, when a certain component is described as being "connected," "coupled," or "linked" to another component, this may include not only a direct connection but also an indirect connection where another component may exist in the middle. Additionally, when a certain component is described as "including" or "having" another component, this means that, unless explicitly stated otherwise, it does not exclude other components but may further include additional components.

In the present disclosure, the terms first, second, etc. are used solely for the purpose of distinguishing one component from another and do not limit the order or importance of the components unless explicitly stated otherwise. Accordingly, a first component in one embodiment may be referred to as a second component in another embodiment, and similarly, a second component in one embodiment may be referred to as a first component in another embodiment within the range of the present disclosure.

In the present disclosure, distinguishable components are described to clearly explain their respective characteristics and do not necessarily mean that the components are separate. In other words, a plurality of components may be integrated into a single hardware or software unit, or a single component may be distributed across multiple hardware or software units. Accordingly, without explicitly describing them, such integrated or distributed embodiments are also included in the range of the present disclosure.

In the present disclosure, the components described in various embodiments do not necessarily mean essential components, and some may be optional components. Accordingly, embodiments composed of a subset of the components described in one embodiment are also included in the range of the present disclosure. Additionally, embodiments that include additional components beyond those described in various embodiments are also included in the range of the present disclosure.

The present disclosure relates to the encoding and decoding of images, and the terms used herein may have the ordinary meanings commonly used in the field of technology to which this disclosure belongs unless the terms are newly defined in the present disclosure.

In the present disclosure, "picture" generally refers to a unit representing a single image at a specific point in time. A slice/tile is an encoding unit that constitutes a part of a picture, and a picture may be composed of one or more slices/tiles. Additionally, a slice/tile may include one or more coding tree units (CTUs).

In the present disclosure, "pixel" or "pel" may refer to the smallest unit that constitutes one picture (or image). Additionally, the term "sample" may be used as a corresponding term for a pixel. A sample may generally represent a pixel or the value of a pixel and may indicate only the pixel/pixel value of a luma component or only the pixel/pixel value of a chroma component.

In the present disclosure, "unit" may refer to a basic unit of image processing. A unit may include at least one of a specific area of a picture or information related to the area. Depending on the context, the term "unit" may be used interchangeably with "sample array," "block," "area," etc. In general, an M×N block may include a set (or array) of samples (or a sample array) or a set (or array) of transform coefficients, consisting of M columns and N rows.

In the present disclosure, the term "current block" may refer to one of "current coding block", "current coding unit", "encoding target block", "decoding target block", or "processing target block". When prediction is performed, "current block" may refer to "current prediction block" or "prediction target block". When transform (inverse transform)/quantization (dequantization) is performed, "current block" may refer to "current transform block" or "transform target block". When filtering is performed, "current block" may refer to "filtering target block".

In the present disclosure, unless explicitly stated as a chroma block, the term "current block" may refer to a block that includes both a luma component block and a chroma component block or may refer to "the luma block of the current block". The luma component block of the current block may be explicitly expressed with terms such as "luma block" or "current luma block", clearly indicating it as a luma component block. Additionally, the chroma component block of the current block may be explicitly expressed with terms such as "chroma block" or "current chroma block", clearly indicating it as a chroma component block.

In the present disclosure, "/" and "," may refer to "and/or". For example, "A/B" and "A, B" may refer to "A and/or B". Additionally, "A/B/C" and "A, B, C" may refer to "at least one of A, B, and/or C".

In the present disclosure, "or" may refer to "and/or". For example, "A or B" may mean 1) "A" only, 2) "B" only, or 3) "A and B." Alternatively, in the present disclosure, "or" may also mean "additionally or alternatively".

### Overview of the video coding system

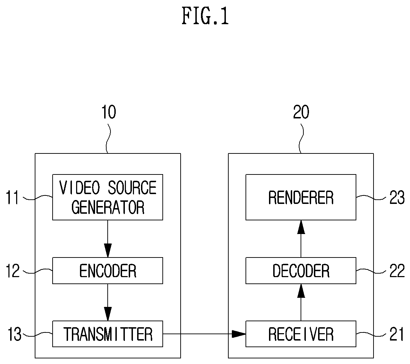

FIG. 1 shows a schematic diagram of a video coding system to which an embodiment according to the present disclosure may be applied.

A video coding system according to an embodiment may include an encoder apparatus 10 and a decoder apparatus 20. The encoder apparatus 10 may transmit encoded video and/or image information or data to the decoder apparatus 20 through a digital storage medium or network in the form of a file or streaming.

An encoder apparatus 10 according to an embodiment may include a video source generator 11, an encoder 12, and a transmitter 13. A decoder apparatus 20 according to an embodiment may include a receiver 21, a decoder 22, and a renderer 23. The encoder 12 may be referred to as a video/image encoder, and the decoder 22 may be referred to as a video/image decoder. The transmitter 13 may be included in the encoder 12. The receiver 21 may be included in the decoder 22. The renderer 23 may include a display, and the display may be configured as a separate device or external component.

The video source generator 11 may obtain a video/an image through a process of capturing, synthesizing, or generating a video/an image. The video source generator 11 may include a video/an image capture device and/or a video/an image generation device. The video/image capture device may include, for example, one or more cameras, a video/an image archive containing previously captured video/image, etc. The video/image generation device includes, for example, a computer, tablet, or smartphone, and may (electronically) generate a video/an image. For example, virtual video/image may be generated through a computer, etc., and in this case, the video/image capturing process may be replaced by the process of generating related data.

The encoder 12 may encode the input video/image. The encoder 12 may perform a series of procedures such as prediction, transform, quantization, etc. for compression and encoding efficiency. The encoder 12 may output the encoded data (encoded video/image information) in the form of a bitstream.

The transmitter 13 may obtain the encoded video/image information or data output in the form of a bitstream and transmit it to the receiver 21 of the decoder apparatus 20 or another external object through a digital storage medium or network, in the form of a file or streaming. The digital storage medium may include various storage media such as USB, SD, CD, DVD, Blu-ray, HDD, SSD, etc. The transmitter 13 may include an element for generating media files through a predetermined file format and element for transmission over broadcast/communication networks. The transmitter 13 may be provided as a separate transmission apparatus from the encoder 12, in which case the transmission apparatus may include at least one processor for obtaining the encoded video/image information or data in bitstream form and a transmitter for delivering it in the form of file or streaming. The receiver 21 may extract/receive the bitstream from the storage medium or network and transmit it to decoder 22.

The decoder 22 may decode the video/image by performing a series of procedures such as dequantization, inverse transform, prediction, etc. corresponding to the operations of the encoder 12.

The renderer 23 may render the decoded video/image. The rendered video/image may be displayed through the display unit.

### Overview of the image encoding apparatus

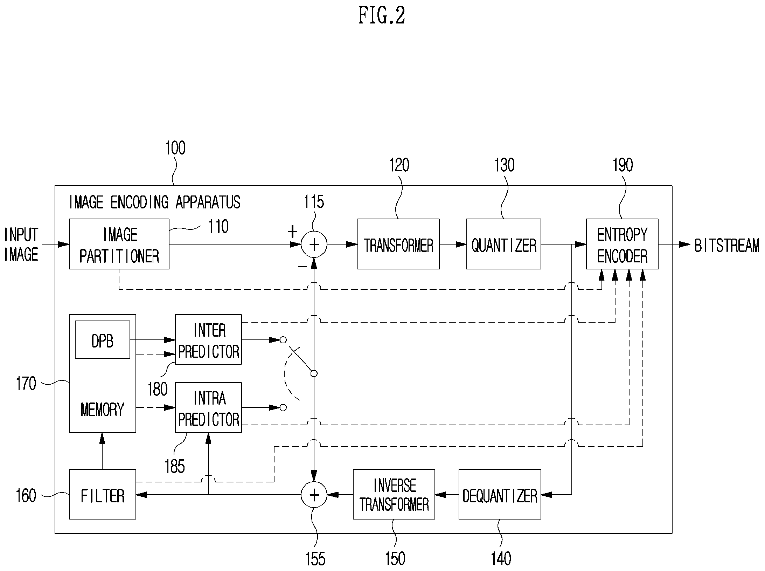

FIG. 2 shows a schematic diagram of an image encoding apparatus to which an embodiment according to the present disclosure may be applied.

As described in FIG. 2, the image encoding apparatus 100 may include an image partitioner 110, a subtractor 115, a transformer 120, a quantizer 130, a dequantizer 140, an inverse transformer 150, an adder 155, a filter 160, a memory 170, an inter predictor 180, an intra predictor 185, and an entropy encoder 190. The inter predictor 180 and the intra predictor 185 may collectively be referred to as a "predictor." The transformer 120, the quantizer 130, the dequantizer 140, and the inverse transformer 150 may be included in a residual processor. The residual processor may further include the subtractor 115.

All or at least some of the multiple components constituting the image encoding apparatus 100 may be implemented as a single hardware component (i.e., an encoder or a processor), depending on the embodiment. Additionally, the memory 170 may include a decoded picture buffer (DPB) and may be implemented by a digital storage medium.

The image partitioner 110 may partition the input image (or picture, frame) input to the image encoding apparatus 100 into at least one processing unit. As an example, the processing unit may be referred to as a coding unit (CU). A coding unit may be obtained by recursively partitioning a coding tree unit (CTU) or a largest coding unit (LCU) according to a quad-tree, binary-tree, or ternary-tree (QT/BT/TT) structure. For example, a coding unit may be divided into a deeper-depth coding unit based on a quad-tree structure, a binary-tree structure, and/or a ternary-tree structure. For partitioning a coding unit, the quad-tree structure may be applied first, followed by the binary-tree structure and/or the ternary-tree structure. The coding procedure according to the present disclosure may be performed based on the final coding unit, which is not further partitioned. The largest coding unit may be used directly as the final coding unit, or a deeper-depth coding unit obtained by partitioning the largest coding unit may be used as the final coding unit. Here, the coding procedure may include a procedure such as prediction, transform, and/or reconstruction, which will be described later. As another example, the processing unit for the coding procedure may be a prediction unit (PU) or a transform unit (TU). The prediction unit and the transform unit may each be divided or partitioned from the final coding unit. The prediction unit may be a unit for sample prediction, and the transform unit may be a unit for deriving a transform coefficient and/or deriving a residual signal from a transform coefficient.

The predictor (inter predictor 180 or intra predictor 185) may perform prediction for a target block (current block) and generate a predicted block that includes prediction samples for the current block. The predictor may determine whether intra prediction or inter prediction is applied to the current block or coding unit (CU). The predictor may generate various information related to the prediction of the current block and transmit it to the entropy encoder 190. The prediction-related information may be encoded by the entropy encoder 190 and may be output in the form of a bitstream.

The intra predictor 185 may predict the current block by referring to samples within the current picture. The referenced samples may be located in the neighboring area of the current block or may be located farther away, depending on the intra prediction mode and/or intra prediction method. The intra prediction modes may include a plurality of non-directional modes and a plurality of directional modes. The non-directional mode may include, for example, a DC mode and a planar mode. The directional mode may include, for example, 33 directional prediction modes or 65 directional prediction modes, depending on the granularity of the prediction direction. However, this is an example, and a greater or fewer number of directional prediction modes may be used depending on the configuration. The intra predictor 185 may also determine the prediction mode applied to the current block by using the prediction mode applied to neighboring block.

The inter predictor 180 may derive a predicted block for the current block based on a reference block (reference sample array) specified by a motion vector on a reference picture. To reduce the amount of motion information transmitted in the inter prediction mode, motion information may be predicted at the block, sub-block, or sample level based on the correlation of motion information between the neighboring block and the current block. The motion information may include a motion vector and a reference picture index. The motion information may further include information on the inter prediction direction (i.e. L0 prediction, L1 prediction, Bi prediction, etc.). In inter prediction, neighboring block may include spatial neighboring block present within the current picture and temporal neighboring block present in the reference picture. The reference picture containing the reference block and the reference picture containing the temporal neighboring block may be the same or different. The temporal neighboring block may be referred to as a collocated reference block or a collocated coding unit (colCU). The reference picture containing the temporal neighboring block may be referred to as a collocated picture (colPic). For example, the inter predictor 180 may construct a motion information candidate list based on neighboring blocks and generate information indicating which candidate is used to derive the motion vector and/or reference picture index of the current block. Inter prediction may be performed based on various prediction modes, and for example, in the skip mode and merge mode, the inter predictor 180 may use the motion information of neighboring block as the motion information of the current block. In skip mode, unlike merge mode, residual signal may not be transmitted. In the motion vector prediction (MVP) mode, the motion vector of a neighboring block may be used as a motion vector predictor, and the motion vector of the current block may be signaled by encoding the motion vector difference and an indicator for the motion vector predictor. The motion vector difference may refer to the difference between the motion vector of the current block and the motion vector predictor.

The predictor may generate a prediction signal based on various prediction methods and/or prediction techniques described later. For example, the predictor may apply intra prediction or inter prediction for the prediction of the current block, and it may also apply both intra prediction and inter prediction simultaneously. The prediction method that applies intra prediction and inter prediction simultaneously for the prediction of the current block may be referred to as combined inter and intra prediction (CIIP). Additionally, the predictor may perform intra block copy (IBC) for the prediction of the current block. Intra block copy may be used, for example, for screen content coding (SCC), etc. in applications such as game content image/video coding. IBC is a method of predicting the current block by using a pre-reconstructed reference block within the current picture, located at a predetermined distance from the current block. When IBC is applied, the position of the reference block within the current picture may be encoded as a vector (block vector) corresponding to the predetermined distance. IBC basically performs prediction within the current picture, but since it derives a reference block within the current picture, it may operate similarly to inter prediction. In other words, IBC may use at least one of the inter prediction methods described in the present disclosure.

The prediction signal generated by the predictor may be used to generate a reconstructed signal or to generate a residual signal. The subtractor 115 may generate a residual signal (residual block, residual sample array) by subtracting the prediction signal (predicted block, predicted sample array) output from the predictor from the input image signal (original block, original sample array). The generated residual signal may be transmitted to the transformer 120.

The transformer 120 may generate transform coefficients by applying a transform method to the residual signal. For example, the transform method may include at least one of Discrete Cosine Transform (DCT), Discrete Sine Transform (DST), Karhunen-Loeve Transform (KLT), Graph-Based Transform (GBT), or Conditionally Non-linear Transform (CNT). Here, GBT refers to a transform obtained from a graph when the relationship information between pixels is represented as a graph. CNT refers to a transform obtained based on a prediction signal generated by using all previously reconstructed pixels. The transform process may be applied to a pixel block of the same square size or to a non-square variable-sized block.

The quantizer 130 may quantize the transform coefficients and transmit them to the entropy encoder 190. The entropy encoder 190 may encode the quantized signal (information on the quantized transform coefficients) and output it as a bitstream. The information on the quantized transform coefficients may be referred to as residual information. The quantizer 130 may rearrange the block-shaped quantized transform coefficients into a one-dimensional vector based on a coefficient scan order and may generate the information on the quantized transform coefficients based on the one-dimensional vector of quantized transform coefficients.

The entropy encoder 190 may perform various encoding methods, such as exponential Golomb, context-adaptive variable length coding (CAVLC), or context-adaptive binary arithmetic coding (CABAC). The entropy encoder 190 may encode not only the quantized transform coefficients but also information necessary for video/image reconstruction (i.e., values of syntax elements) either together or separately with the quantized transform coefficients. The encoded information (i.e., encoded video/image information) may be transmitted or stored in the form of a bitstream in network abstraction layer (NAL) unit. The video/image information may further include information on various parameter sets, such as an adaptation parameter set (APS), a picture parameter set (PPS), a sequence parameter set (SPS), or a video parameter set (VPS). Additionally, the video/image information may further include general constraint information. The signaling information, transmitted information, and/or syntax elements described in the present disclosure may be included in the bitstream by being encoded through the above-described encoding process.

The bitstream may be transmitted through a network or stored in a digital storage medium. Here, the network may include a broadcast network and/or a communication network, etc., and the digital storage medium may include various storage media such as USB, SD, CD, DVD, Blu-ray, HDD, SSD, etc.
A transmitter (not shown) for transmitting the signal output from the entropy encoder 190 and/or a storage unit (not shown) for storing the signal may be provided as an internal/external element of the image encoding apparatus 100, or the transmitter may be configured as a component of the entropy encoder 190.

The quantized transform coefficients output from the quantizer 130 may be used to generate a residual signal. For example, a residual signal (residual block or residual samples) may be reconstructed by applying dequantization and inverse transform to the quantized transform coefficients through the dequantizer 140 and the inverse transformer 150.

The adder 155 may generate a reconstructed signal (reconstructed picture, reconstructed block, or reconstructed sample array) by adding the reconstructed residual signal to the prediction signal output from the inter predictor 180 or the intra predictor 185. When there is no residual for the target block, such as when the skip mode is applied, the predicted block may be used as the reconstructed block. The adder 155 may be referred to as a reconstructor or a reconstructed block generator. The generated reconstructed signal may be used for intra prediction of the next target block within the current picture and, as described later, may also be used for inter prediction of the next picture after undergoing filtering.

The filter 160 may apply filtering to the reconstructed signal to enhance subjective/objective quality. For example, the filter 160 may apply various filtering methods to the reconstructed picture to generate a modified reconstructed picture, and the modified reconstructed picture may be stored in the memory 170, specifically in the DPB of the memory 170. The various filtering methods may include, for example, deblocking filtering, sample adaptive offset, adaptive loop filter, bilateral filter, etc. The filter 160 may generate various filtering-related information, as described later in the explanations of each filtering method, and may transmit it to the entropy encoder 190. The filtering-related information may be encoded by the entropy encoder 190 and output in the form of a bitstream.

The modified reconstructed picture transmitted to the memory 170 may be used as a reference picture in the inter predictor 180. When inter prediction is applied in this case, the image encoding apparatus 100 may avoid prediction mismatches between the image encoding apparatus 100 and the image decoding apparatus, and may improve encoding efficiency.

The DPB in the memory 170 may store the modified reconstructed picture for use as a reference picture in the inter predictor 180. The memory 170 may store the motion information of a block in the current picture where motion information has been derived (or encoded) and/or the motion information of blocks in already reconstructed pictures. The stored motion information may be transmitted to the inter predictor 180 for use as motion information of spatial neighboring block or temporal neighboring block. The memory 170 may store the reconstructed samples of reconstructed blocks in the current picture and transmit them to the intra predictor 185.

### Overview of the image decoding apparatus

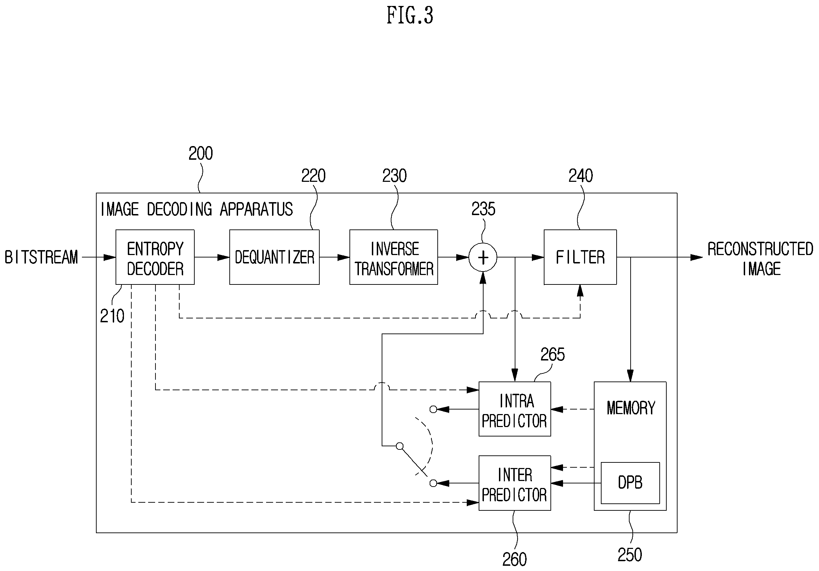

FIG. 3 shows a schematic diagram of an image decoding apparatus to which an embodiment according to the present disclosure may be applied.

As shown in FIG. 3, the image decoding apparatus 200 may include an entropy decoder 210, a dequantizer 220, an inverse transformer 230, an adder 235, a filter 240, a memory 250, an inter predictor 260, and an intra predictor 265. The inter predictor 260 and the intra predictor 265 may collectively be referred to as a "predictor". The dequantizer 220 and the inverse transformer 230 may be included in a residual processor.

All or at least some of the multiple components constituting the image decoding apparatus 200 may be implemented as a single hardware component (i.e., a decoder or a processor), depending on the embodiment. Additionally, the memory 170 may include a DPB and may be implemented by a digital storage medium.

The image decoding apparatus 200, which receives a bitstream containing video/image information, may perform a process corresponding to the process performed by the image encoding apparatus 100 in FIG. 2 to reconstruct the image. For example, the image decoding apparatus 200 may perform decoding using the processing unit applied in the image encoding apparatus. Therefore, the processing unit for decoding may be, for example, a coding unit. The coding unit may be a coding tree unit or may be obtained by splitting a largest coding unit. Additionally, the reconstructed image signal decoded and output through the image decoding apparatus 200 may be played back through a playback device (not shown).

The image decoding apparatus 200 may receive a signal output from the image encoding apparatus in FIG. 2 in the form of a bitstream. The received signal may be decoded through the entropy decoder 210. For example, the entropy decoder 210 may parse the bitstream to extract the information necessary for image reconstruction (or picture reconstruction) (i.e., video/image information). The video/image information may further include information on various parameter sets, such as an adaptation parameter set (APS), a picture parameter set (PPS), a sequence parameter set (SPS), or a video parameter set (VPS). Additionally, the video/image information may further include general constraint information. The image decoding apparatus may additionally use information on the parameter set and/or the general constraint information to decode the image. The signaling information, received information, and/or syntax elements described in the present disclosure may be obtained from the bitstream by being decoded through the decoding process. For example, the entropy decoder 210 may decode the information in the bitstream based on coding methods such as exponential Golomb encoding, CAVLC, or CABAC, and may output a syntax element value necessary for image reconstruction and quantized values of a transform coefficient related to a residual. More specifically, the CABAC entropy decoding method may receive a bin corresponding to a syntax element in the bitstream, may determine a context model using the information of the decoding target syntax element, the decoding information of neighboring block and the decoding target block, or information of previously decoded symbol/bin, may predict the probability of bin occurrence according to the determined context model, and may perform arithmetic decoding of the bin to generate a symbol corresponding to each syntax element. In this case, the CABAC entropy decoding method may update the context model for the next symbol/bin context model using the decoded symbol/bin information after determining the context model. Among the decoded information from the entropy decoder 210, the prediction-related information may be provided to the predictor (inter predictor 260 and intra predictor 265), and the residual value which is entropy decoded by the entropy decoder 210, in other words, the quantized transform coefficients and related parameter information, may be input to the dequantizer 220. Additionally, among the decoded information from the entropy decoder 210, filtering-related information may be provided to the filter 240. Meanwhile, a receiver (not shown) that receives the signal output from the image encoding apparatus may be additionally configured as an internal/external element of the image decoding apparatus 200, or the receiver may be configured as a component of the entropy decoder 210.

Meanwhile, the image decoding apparatus according to the present disclosure may also be referred to as a video/image/picture decoding apparatus. The image decoding apparatus may include an information decoder (video/image/picture information decoder) and/or a sample decoder (video/image/picture sample decoder). The information decoder may include the entropy decoder 210, and the sample decoder may include at least one of the dequantizer 220, the inverse transformer 230, the adder 235, the filter 240, the memory 250, the inter predictor 260, or the intra predictor 265.

The dequantizer 220 may dequantize the quantized transform coefficients and output the transform coefficients. The dequantizer 220 may rearrange the quantized transform coefficients into a two-dimensional block. In this case, the rearrangement may be performed based on the coefficient scan order applied in the image encoding apparatus. The dequantizer 220 may perform dequantization on the quantized transform coefficients using quantization parameter (i.e., quantization step size information) and may obtain transform coefficients.

The inverse transformer 230 may perform an inverse transform on the transform coefficients to obtain a residual signal (residual block, or residual sample array).

The predictor may perform prediction for the current block and generate a predicted block that includes prediction samples for the current block. The predictor may determine whether intra prediction or inter prediction is applied to the current block based on the prediction-related information output from the entropy decoder 210 and may determine a specific intra/inter prediction mode (prediction method).

That the predictor may generate a prediction signal based on various prediction methods (techniques) which will be described later is the same as described in the explanation of the predictor in the image encoding apparatus 100.

The intra predictor 265 may predict the current block by referring to samples within the current picture. The explanation of the intra predictor 185 may also be applied in the same way to the intra predictor 265.

The inter predictor 260 may derive a predicted block for the current block based on a reference block (reference sample array) specified by a motion vector on a reference picture. In this case, to reduce the amount of motion information transmitted in the inter prediction mode, motion information may be predicted at the block, sub-block, or sample level based on the correlation of motion information between the neighboring block and the current block. The motion information may include a motion vector and a reference picture index. The motion information may further include information on the inter prediction direction (i.e., L0 prediction, L1 prediction, Bi prediction, etc.). In inter prediction, a neighboring block may include spatial neighboring block within the current picture and temporal neighboring block in the reference picture. For example, the inter predictor 260 may construct a motion information candidate list based on neighboring blocks and derive the motion vector and/or reference picture index of the current block based on the received candidate selection information. Inter prediction may be performed based on various prediction modes (methods), and the prediction-related information may include information indicating the inter prediction mode (method) applied to the current block.

The adder 235 may generate a reconstructed signal (reconstructed picture, reconstructed block, reconstructed sample array) by adding the obtained residual signal to the prediction signal (predicted block, predicted sample array) output from the predictor (including the inter predictor 260 and/or the intra predictor 265). When there is no residual for the target block, such as when the skip mode is applied, the predicted block may be used as the reconstructed block. The explanation of the adder 155 may also be applied in the same way to the adder 235. The adder 235 may be referred to as a reconstructor or a reconstructed block generator. The generated reconstructed signal may be used for intra prediction of the next target block within the current picture and as described later, may also be used for inter prediction of the next picture after undergoing filtering.

The filter 240 may apply filtering to the reconstructed signal to enhance subjective/objective quality. For example, the filter 240 may apply various filtering methods to the reconstructed picture to generate a modified reconstructed picture, and the modified reconstructed picture may be stored in the memory 250, specifically in the DPB of the memory 250. The various filtering methods may include, for example, deblocking filtering, sample adaptive offset, adaptive loop filter, bilateral filter, etc.

The (modified) reconstructed picture stored in the DPB of the memory 250 may be used as a reference picture in the inter predictor 260. The memory 250 may store the motion information of a block in the current picture where motion information has been derived (or decoded) and/or the motion information of blocks in already reconstructed picture. The stored motion information may be transmitted to the inter predictor 260 to be used as motion information of a spatial neighboring block or a temporal neighboring block. The memory 250 may store the reconstructed samples of reconstructed blocks in the current picture and transmit them to the intra predictor 265.

In this specification, the embodiments described for the filter 160, the inter predictor 180, and the intra predictor 185 of the image encoding apparatus 100 may be applied in the same or corresponding manner to the filter 240, the inter predictor 260, and the intra predictor 265 of the image decoding apparatus 200.

### Intra Prediction Mode/Type Determination

When intra prediction is applied, an intra prediction mode to be applied to a current block may be determined by using intra prediction mode of a neighboring block. For example, a decoding apparatus may select one of most probable mode (MPM) candidates within an MPM list, which is derived based on the intra prediction mode of a neighboring block (e.g., left and/or above neighboring block) of the current block and additional candidate modes, based on a received MPM index. Alternatively, one of remaining intra prediction modes, which are not included in the MPM candidates (and a planar mode), may be selected based on remaining intra prediction mode information. The MPM list may be configured to include or exclude the planar mode as a candidate. For example, when the MPM list includes the planar mode as a candidate, the MPM list may have six candidates, and when the MPM list excludes the planar mode as a candidate, the MPM list may have three candidates. When the MPM list excludes the planar mode as a candidate, a not planar flag (i.e., intra_luma_not_planar_flag) indicating whether the intra prediction mode of the current block is not the planar mode may be signaled. For example, an MPM flag may be signaled first, and the MPM index and the not planar flag may be signaled when the value of the MPM flag is 1. In addition, the MPM index may be signaled when the value of the not planar flag is 1. Here, the configuration in which the MPM list excludes the planar mode as a candidate does not mean that the planar mode is not considered as an MPM, but rather, since the planar mode is always considered as an MPM, the not planar flag is signaled first to determine whether the mode is the planar mode first.

For example, whether the intra prediction mode applied to the current block is among the MPM candidates (and the planar mode) or among the remaining mode may be indicated based on an MPM flag (e.g., intra_luma_mpm_flag). A value of 1 for the MPM flag may indicate that the intra prediction mode for the current block is within the MPM candidates (and the planar mode), and a value of 0 for the MPM flag may indicate that the intra prediction mode for the current block is not within the MPM candidates (and the planar mode). A value of 0 for the not planar flag (i.e., intra_luma_not_planar_flag) may indicate that the intra prediction mode for the current block is the planar mode, and a value of 1 for the not planar flag may indicate that the intra prediction mode for the current block is not the planar mode. The MPM index may be signaled in the form of a syntax element such as mpm_idx or intra_luma_mpm_idx, and the remaining intra prediction mode information may be signaled in the form of a syntax element such as rem_intra_luma_pred_mode or intra_luma_mpm_remainder. For example, the remaining intra prediction mode information may indicate one of the remaining intra prediction modes that are not included in the MPM candidates (and the planar mode), indexed in order of prediction mode numbers among all intra prediction modes. The intra prediction mode may be an intra prediction mode for a luma component (sample). Hereinafter, the intra prediction mode information may include at least one of the MPM flag (i.e., intra_luma_mpm_flag), the not planar flag (i.e., intra_luma_not_planar_flag), the MPM index (i.e., mpm_idx or intra_luma_mpm_idx), and the remaining intra prediction mode information (i.e., rem_intra_luma_pred_mode or intra_luma_mpm_remainder). In present disclosure, the MPM list may also be referred to by various terms such as MPM candidate list or candModeList. When MIP is applied to the current block, a separate MPM flag (i.e., intra_mip_mpm_flag), MPM index (i.e., intra_mip_mpm_idx), and remaining intra prediction mode information (i.e., intra_mip_mpm_remainder) for MIP may be signaled, and the not planar flag may not be signaled.

The intra prediction mode signaling procedure in the encoding apparatus and the intra prediction mode determination procedure in the decoding apparatus may be performed as an example below.

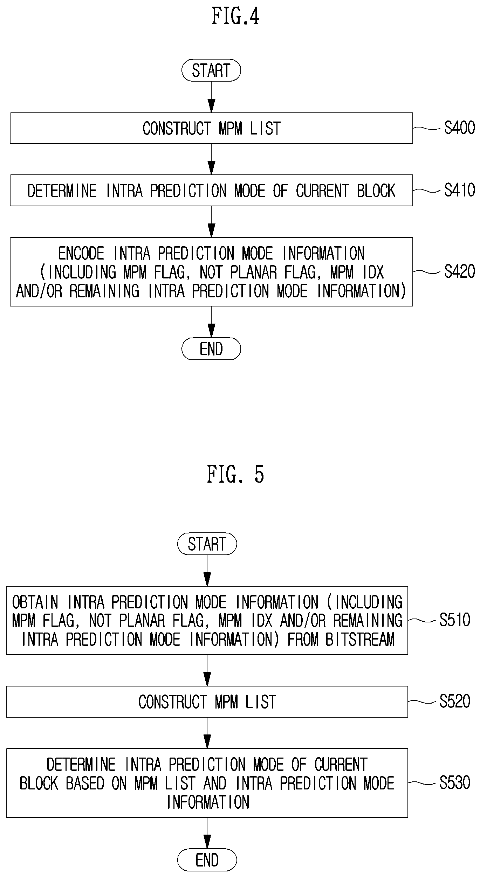

FIG. 4 shows a flowchart of an example of an intra prediction mode signaling method in an encoding apparatus.

Referring to FIG. 4, the encoding apparatus constructs an MPM list for a current block S400. The MPM list may include candidate intra prediction modes (MPM candidates) that have a high possibility of being applied to the current block. The MPM list may include intra prediction mode of a neighboring block, and may additionally include specific intra prediction modes according to a predetermined method. The specific method for configuring the MPM list will be described later.

The encoding apparatus determines an intra prediction mode of the current block S410. The encoding apparatus may perform prediction based on various intra prediction modes and may determine an optimal intra prediction mode based on rate-distortion optimization (RDO). In this case, the encoding apparatus may determine the optimal intra prediction mode by using only the MPM candidates included in the MPM list and the planar mode, or may determine the optimal intra prediction mode by additionally using the remaining intra prediction modes in addition to the MPM candidates included in the MPM list and the planar mode. Specifically, for example, when the intra prediction type of the current block is a specific type (i.e., LIP, MRL, or ISP) rather than a normal intra prediction type, the encoding apparatus may determine the optimal intra prediction mode by considering only the MPM candidates and the planar mode as the intra prediction mode candidates for the current block. In other words, in this case, the intra prediction mode for the current block may be determined only from among the MPM candidates and the planar mode, and the MPM flag may not be encoded/signaled in this case. The decoding apparatus, in this case, may estimate that the MPM flag is 1 without receiving the MPM flag separately.

Meanwhile, in general, when the intra prediction mode of the current block is not the planar mode and is one of the MPM candidates in the MPM list, the encoding apparatus generates an MPM index (mpm idx) indicating one of the MPM candidates. When the intra prediction mode of the current block is not included in the MPM list either, the encoding apparatus generates remaining intra prediction mode information that indicates a mode among the remaining intra prediction modes not included in the MPM list (and the planar mode), which is the same as the intra prediction mode of the current block.

The encoding apparatus may encode the intra prediction mode information and output it in the form of a bitstream. The intra prediction mode information may include the above-described MPM flag, not planar flag, MPM index, and/or remaining intra prediction mode information. In general, the MPM index and the remaining intra prediction mode information are in an alternative relationship and may not be signaled simultaneously for indicating the intra prediction mode of a block. In other words, the MPM flag value 1 may be signaled along with the not planar flag or the MPM index, and the MPM flag value 0 may be signaled along with the remaining intra prediction mode information. However, as described above, when a specific intra prediction type is applied to the current block, the MPM flag may not be signaled, and only the not planar flag and/or the MPM index may be signaled. In other words, in this case, the intra prediction mode information may include only the not planar flag and/or the MPM index.

The decoding apparatus may determine an intra prediction mode corresponding to the intra prediction mode information determined and signaled by the encoding apparatus.

FIG. 5 shows a flowchart of an example of an intra prediction mode determination method in a decoding apparatus.

Referring to FIG. 5, the decoding apparatus obtains intra prediction mode information from a bitstream S500. The intra prediction mode information may include at least one of an MPM flag, a not planar flag, an MPM index, and remaining intra prediction mode, as described above.

The decoding apparatus constructs an MPM list S510. The MPM list is configured in the same manner as the MPM list configured by the encoding apparatus. In other words, the MPM list may include an intra prediction mode of a neighboring block and may further include specific intra prediction modes according to a predetermined method. The specific method for configuring the MPM list will be described later.

Although S510 is illustrated as being performed after S500, this is merely an example, and S510 may be performed before or simultaneously with S500.

The decoding apparatus determines an intra prediction mode of the current block based on the MPM list and the intra prediction mode information S520. As an example, when the value of the MPM flag is 1, the decoding apparatus may derive the planar mode as the intra prediction mode of the current block (based on the not planar flag), or may derive a candidate indicated by the MPM index among the MPM candidates in the MPM list as the intra prediction mode of the current block. In another example, when the value of the MPM flag is 0, the decoding apparatus may derive an intra prediction mode indicated by the remaining intra prediction mode information from among the remaining intra prediction modes not included in the MPM list and the planar mode as the intra prediction mode of the current block. Meanwhile, in another example, when the intra prediction type of the current block is a specific type (i.e., LIP, MRL, IST, etc.), the decoding apparatus may derive, without checking the MPM flag, the planar mode or a candidate indicated by the MPM index in the MPM list as the intra prediction mode of the current block.

For example, the not planar flag may be signaled when MRL is not applied to the current block (i.e., when intra_luma_ref_idx == 0), and the not planar flag may be omitted when MRL is applied to the current block (i.e., when intra_luma_ref_idx != 0). When the not planar flag is omitted, its value may be estimated as 1 by the decoding apparatus.

Meanwhile, intra prediction modes may include two directional intra prediction modes and 65 directional prediction modes. The non-directional intra prediction modes may include a planar intra prediction mode and a DC intra prediction mode, and the directional intra prediction modes may include intra prediction modes numbered from 2 to 66. The extended directional intra prediction mode may be applied to blocks of all sizes and may be applied to both luma and chroma components.

Meanwhile, in addition to the intra prediction modes described above, the intra prediction mode may further include a cross-component linear model (CCLM) mode for a chroma sample. The CCLM mode may be classified into LT_CCLM, L_CCLM, and T_CCLM depending on whether left samples, top samples, or both are considered for deriving a LM parameter, and it may be applied only to a chroma component.

The intra prediction modes, for example, may be indexed as shown in Table 1 below.

**[Table 1]**

| Intra prediction mode | Associated name |
|---|---|
| 0 | INTRA_PLANAR |
| 1 | INTRA_DC |
| 2..66 | INTRA_ANGULAR2..INTRA_ANGULAR66 |
| 81..83 | INTRA_LT_CCLM, INTRA_L_CCLM, INTRA_T_CCLM |

Meanwhile, the intra prediction type (or additional intra prediction mode, etc.) may include at least one of LIP, PDPC, MRL, ISP, and MIP, as described above. The intra prediction type may be indicated based on intra prediction type information, and the intra prediction type information may be implemented in various forms. As an example, the intra prediction type information may include intra prediction type index information indicating one of the intra prediction types. In another example, the intra prediction type information may include at least one of reference sample line information (i.e., intra_luma_ref_idx) indicating whether MRL is applied to the current block and, when applied, which reference sample line is used, an ISP flag (i.e., intra_subpartitions_mode_flag) indicating whether ISP is applied to the current block, ISP type information (i.e., intra_subpartitions_split_flag) indicating a split type of subpartitions when ISP is applied, a flag information indicating whether PDPC is applied, or a flag information indicating whether LIP is applied. In addition, the intra prediction type information may include an MIP flag (which may be referred to as intra_mip_flag) indicating whether MIP is applied to the current block.

Meanwhile, as described above, when MIP is applied to the current block (i.e., when the value of intra_mip_flag is 1), an MPM list for MIP may be separately configured, and the intra prediction mode information for MIP may include an MPM flag referred to as intra_mip_mpm_flag, an MPM index referred to as intra_mip_mpm_idx, and remaining intra prediction mode information referred to as intra_mip_mpm_remainder.

In addition, various prediction modes may be used for MIP, and a matrix and an offset for MIP may be derived based on the intra prediction mode for MIP. As described above, the matrix may be referred to as a (MIP) weight matrix, and the offset may be referred to as a (MIP) offset vector or a (MIP) bias vector. The number of intra prediction modes for MIP may be differently set based on the size of the current block. For example, i) when the height and width of the current block (i.e., CB or TB) are both 4, 35 intra prediction modes (i.e., intra prediction mode 0 to 34) may be available, ii) when both the height and width of the current block are equal to or less than 8, 19 intra prediction modes (i.e., intra prediction mode 0 to 18) may be available, iii) in other cases, 11 intra prediction modes (i.e., intra prediction mode 0 to 10) may be available. For example, when the height and width of the current block are both 4, it may be referred to as block size type 0, when both the height and width of the current block are equal to or less than 8, it may be referred to as block size type 1, and in other cases, it may be referred to as block size type 2, and the number of intra prediction modes for MIP may be organized in the following table. However, this is merely an example, and the block size type and the number of available intra prediction modes may be changed. In the present disclosure, the intra prediction mode for MIP may be referred to as an MIP intra prediction mode, an MIP prediction mode, or an MIP mode.

**[Table 2]**

| block size type (MipSizeId) | number of MIP intra prediction modes | MIP intra prediction mode |
|---|---|---|
| 0 | 35 | 0...34 |
| 1 | 19 | 0...18 |
| 2 | 11 | 0...10 |

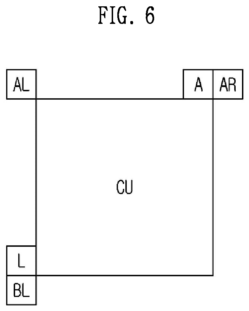

Meanwhile, in an enhanced compression model (ECM), a secondary MPM list has been introduced. The conventional primary MPM (PMPM) list includes six entries, and the secondary MPM (SMPM) list includes sixteen entries. First, a general MPM list having twenty-two entries is configured, and the first six entries in the general MPM list are included in the PMPM list, while the remaining entries are included in the SMPM list. The first entry in the general MPM list is a planar mode, and the remaining entries are composed of intra modes of neighboring blocks on the left (L), above (A), below-left (BL), above-right (AR), and above-left (AL), directional modes to which offsets are added from the first two available directional modes of the neighboring blocks, and a default mode, as described in FIG. 6.

When a CU block is in a vertical direction, the order of neighboring blocks may be above (A), left (L), below-left (BL), above-right (AR), and above-left (AL). Otherwise, the order may be left (L), above (A), below-left (BL), above-right (AR), and above-left (AL).

A PMPM flag is parsed, and when its value is 1, a PMPM index may be parsed to determine which entry in the PMPM list is selected. Otherwise, an SPMPM flag may be parsed to determine whether to parse an SPMPM index or remaining modes.

### Neighboring Reference Sample Derivation

When intra prediction is applied to a current block, neighboring reference samples to be used for intra prediction of a current block may be derived. The neighboring reference samples of the current block may include a total of 2×nH samples adjacent to the left boundary and neighboring the bottom-left of a nW×nH-sized current block, a total of 2×nW samples adjacent to the top boundary and neighboring the top-right of a current block and one sample neighboring the top-left of a current block. Alternatively, the neighboring reference samples of the current block may include top neighboring samples of a plurality of columns and left neighboring samples of a plurality of rows. In addition, the neighboring reference samples of the current block may include a total of nH samples adjacent to the right boundary of a nWxnH-sized current block, a total of nW samples adjacent to the bottom boundary of a current block, and one sample neighboring the bottom-right of a current block.

Meanwhile, when a MRL described below is applied, reference samples may be located on lines 1 to 3, not line 0 adjacent to a current block on the left/top, and in this case, the number of neighboring reference samples may increase further. The area and number of specific neighboring reference samples are described below.

Meanwhile, when ISP described below is applied, the neighboring reference samples may be derived in the unit of a sub-partition.

Some of the neighboring reference samples of a current block may not be decoded yet, or may not be available. In this case, a decoder may configure neighboring reference samples to be used for prediction through interpolation of available samples.

Some of the neighboring reference samples of a current block may not be decoded yet, or may not be available. In this case, a decoder may configure neighboring reference samples to be used for prediction through extrapolation of available samples. Until reaching a top-right reference sample starting from the bottom-left, they may be configured by substituting or padding a pixel that is not decoded yet or that is unavailable with the last available sample while updating a referenceable sample into the latest sample (the last available sample).

### Intra Prediction Mode/Type based Prediction Sample Derivation

A predictor of an encoding apparatus/decoding apparatus may derive a reference sample from an intra prediction mode of a current block among neighboring reference samples of a current block, and may generate a prediction sample of the current block based on the reference sample.

For example, (i) a prediction sample may be derived based on an average or interpolation of neighboring reference samples of a current block, and (ii) the prediction sample may be derived based on a reference sample located in a specific (prediction) direction among the neighboring reference samples of the current block. Case (i) may be referred to as a non-directional mode or a non-angular mode, and case (ii) may be referred to as a directional mode or an angular mode. In addition, the prediction sample may be generated by interpolation between a first neighboring sample and a second neighboring sample, the second neighboring sample being located in a direction opposite to the prediction direction of the intra prediction mode of the current block with respect to the prediction sample of the current block among the neighboring reference samples. The above-described case may be referred to as linear interpolation intra prediction (LIP). Additionally, a temporary prediction sample of the current block may be derived based on filtered neighboring reference samples, and a prediction sample of the current block may be derived by performing a weighted sum of the temporary prediction sample and at least one reference sample, derived by the intra prediction mode, among the conventional neighboring reference samples, in other words, unfiltered neighboring reference samples. The above-described case may be referred to as position dependent intra prediction (PDPC). In addition, among neighboring multiple reference sample line of the current block, a reference sample line with the highest prediction accuracy may be selected, and a prediction sample may be derived by using a reference sample located in the prediction direction on the selected line, and in this case, the intra prediction encoding may be performed by signaling the used reference sample line to the decoding apparatus. The above-described case may be referred to as multi-reference line intra prediction (MRL) or MRL-based intra prediction. Additionally, the current block may be divided into vertical or horizontal subpartitions, and intra prediction may be performed based on the same intra prediction mode, while neighboring reference samples may be derived and used in the subpartition unit. In this case, the intra prediction mode of a current block is applied in the same manner to the subpartitions, intra prediction performance may be improved by deriving and using a neighboring reference sample in the subpartition unit. This prediction method may be referred to as intra sub-partitions (ISP) or ISP-based intra prediction. Detailed description will be described later. In addition, when a prediction direction based on a prediction sample points the position between the neighboring reference samples, in other words, when the prediction direction points to a fractional sample position, a value of the prediction sample may be derived through interpolation of a plurality of reference samples located around the corresponding prediction direction (i.e., corresponding fractional sample position neighbor).

The above-described intra prediction methods may be referred to as intra prediction type, distinguished from intra prediction mode. The intra prediction type may also be referred to by various terms such as intra prediction technique or additional intra prediction mode. For example, the intra prediction type (or additional intra prediction mode, etc.) may include at least one of the above-described LIP, PDPC, MRL, or ISP. Information on the intra prediction type may be encoded by an encoding apparatus and included in a bitstream to be signaled to a decoding apparatus. The information on the intra prediction type may be implemented in various forms, such as flag information indicating whether each intra prediction type is applied, or index information indicating one of intra prediction type among multiple intra prediction types.

The MPM list for deriving the above-described intra prediction mode may be configured differently according to the intra prediction type. Alternatively, the MPM list may be commonly configured regardless of the intra prediction type.

### Neighboring Reference Sample Derivation

When intra prediction is applied to a current block, neighboring reference samples to be used for intra prediction of a current block may be derived. The neighboring reference samples of the current block may include a total of 2×nH samples adjacent to the left boundary and neighboring the bottom-left of a nW×nH-sized current block, a total of 2×nW samples adjacent to the top boundary and neighboring the top-right of a current block and one sample neighboring the top-left of a current block. Alternatively, the neighboring reference samples of the current block may include top neighboring samples of a plurality of columns and left neighboring samples of a plurality of rows. In addition, the neighboring reference samples of the current block may include a total of nH samples adjacent to the right boundary of a nWxnH-sized current block, a total of nW samples adjacent to the bottom boundary of a current block, and one sample neighboring the bottom-right of a current block.

Meanwhile, when a multiple reference line (MRL) is applied, reference samples may be located on lines 1 to 3, not line 0 adjacent to a current block on the left/top, and in this case, the number of neighboring reference samples may increase further. The area and number of specific neighboring reference samples are described below.

Meanwhile, when intra sub-partitions (ISP) is applied, the neighboring reference samples may be derived in the unit of a sub-partition.

### DIMD(Decoder side intra mode derivation)

In DIMD, intra prediction may be derived as a weighted average between a planar and two derived directions. For this purpose, two angular modes are selected from a histogram of gradient (HoG) calculated from the neighboring pixels of a current block. When the two modes are selected, their predictors (prediction blocks) and a planar predictor may be normally calculated, and the corresponding weighted average may be used as the final predictor (the final prediction block) of a current block. In this case, to determine a weight, corresponding amplitudes within an HoG are used for each of the two modes.

Since derived intra modes are included within the primary list of an intra MPM, a DIMD process may be performed before constructing an MPM list. The primary derived intra mode of a DIMD block is stored with a block and may be used to construct the MPM list of neighboring blocks.

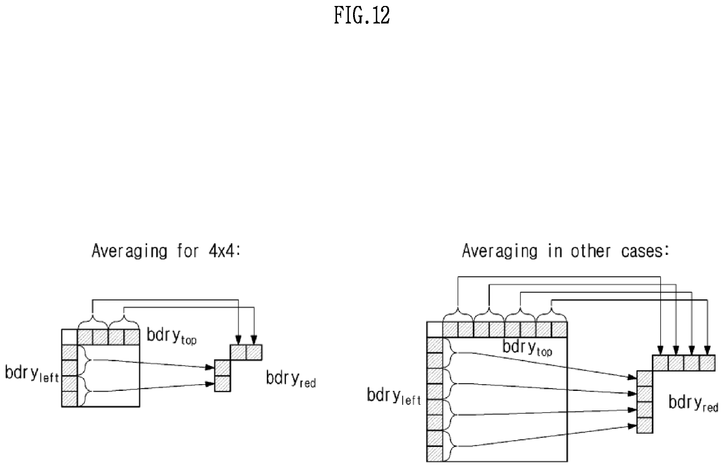

A DIMD chroma mode may use a DIMD derivation method to derive the chroma intra prediction mode of a current block based on pre-reconstructed neighboring Y, Cb and Cr samples within the second neighboring row and column illustrated in FIG. 12. Specifically, to build an HoG, a horizontal gradient and a vertical gradient may be calculated for each collocated pre-reconstructed luma sample of a current chroma block as well as pre-reconstructed Cb and Cr samples. Thereafter, the chroma intra prediction of the current chroma block may be performed by using an intra prediction mode with the largest histogram amplitude value.

When an intra prediction mode derived from a DIMD chroma mode is the same as an intra prediction mode derived from a DM mode, an intra prediction mode with the second largest histogram amplitude value may be used as a DIMD chroma mode. A predetermined CU level flag may be signaled to indicate whether the above-described DIMD chroma mode is applied.

### TIMD (Fusion for template-based intra mode derivation)

For each intra prediction mode in the MPM, the SATD between the prediction sample of a template and the reconstructed sample may be calculated. Then, the first two intra prediction modes with the smallest SATD may be selected as TIMD modes. These two TIMD modes may be fused according to a weight, and such weighted intra prediction may be used for coding the current CU. The derivation of the TIMD mode may include the above-described Position Dependent Intra Prediction Combination (PDPC).

The cost of the two selected modes may be compared with a predetermined threshold, and a cost factor 2 may be applied as shown in Equation 1 below. $costMode 2 < 2 * costMode 1$

When the condition of Equation 1 is true, the above-described fusion may be applied. In contrast, when the condition of Equation 1 is false, only mode 1 may be used.

Meanwhile, the weight of the modes may be calculated from their respective SATD costs as shown in Equation 2 below. $\begin{matrix}weight 1 = costMode 2 / \left(costMode1+costMode2\right) \\ weight 2 = 1 - weight 1\end{matrix}$

### MIP(Matrix-based intra prediction)

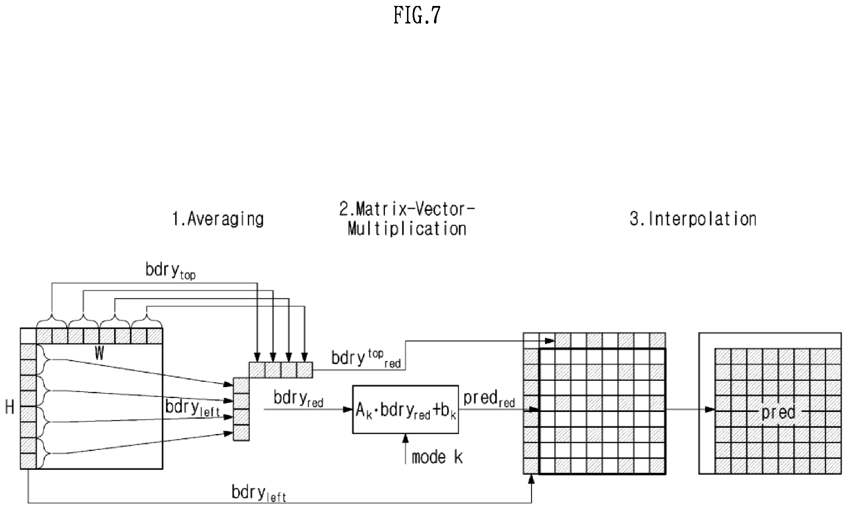

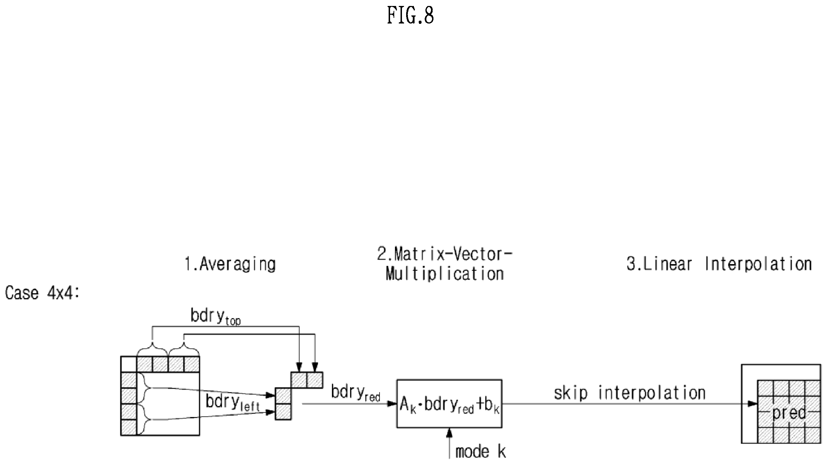

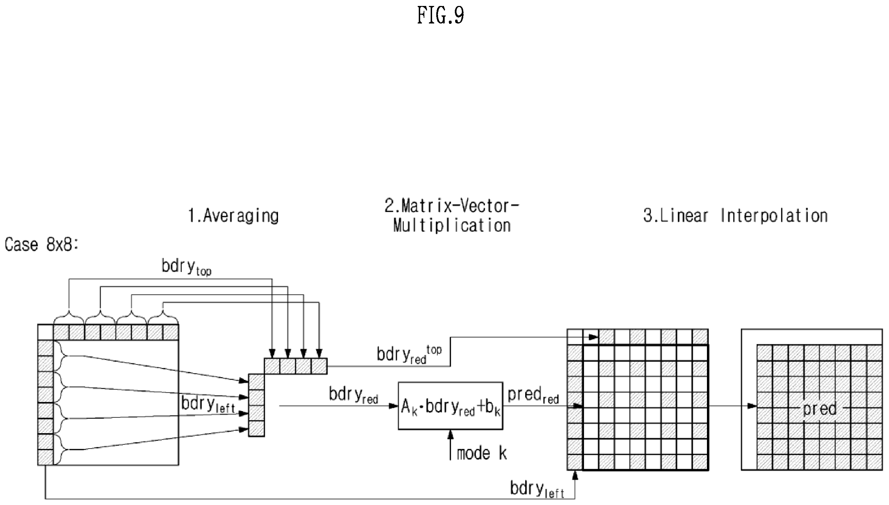

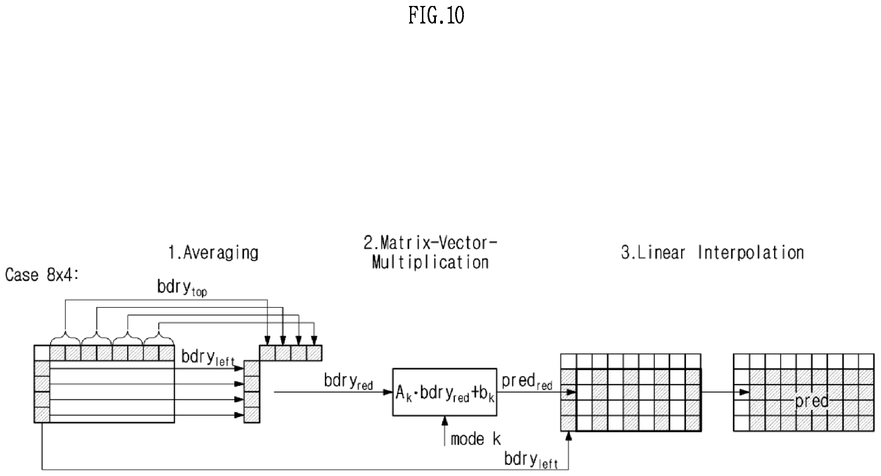

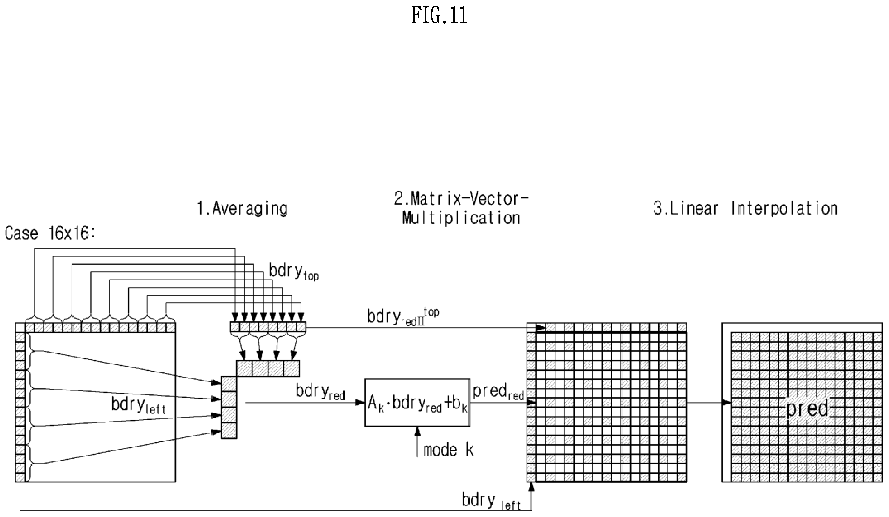

FIGS. 7 to 11 are a diagram for describing a matrix-based intra prediction (MIP) process that may be applied to the present disclosure.

Matrix-based Intra Prediction (MIP) may be referred to as Affine Linear Weighted Intra Prediction (ALWIP) or Matrix-weighted Intra Prediction (MIP or MWIP). In order to predict samples of a rectangular block with a width of W and a height of H, MIP uses a line consisting of H reconstructed samples neighboring the left boundary of a block and a line consisting of W reconstructed samples neighboring the top boundary as an input. When reconstructed samples are unavailable, they may be generated in the same manner as generated by the existing intra prediction.

A prediction signal may be generated basically according to the following steps:
1. It may be extracted by averaging 4 samples in case of W=H=4 and 8 samples for other cases among the boundary samples (the averaging process).
2. Matrix vector multiplication performed after offset addition may be performed by using averaged samples as an input. As a result of this process, a reduced prediction signal for the subsampled sample set of an original block may be obtained (the matrix vector multiplication process).
3. A prediction signal at the remaining positions may be generated through linear interpolation, which is single step linear interpolation in each direction, from the prediction signal of a subsampling set (the (linear) interpolation process).

A matrix and an offset vector required to generate a prediction signal (a prediction block or a prediction sample) may be obtained from three sets of matrices, *S*₀, *S*₁,*S*₂. Set *S*₀ consists of 18 matrices ${A}_{0}^{i} , i ∈ \left\{0,…,17\right\}$, but each matrix may have 16 rows, 4 columns and 18 offset vectors ${b}_{0}^{i} , i ∈ \left\{0,…,17\right\}$, each of which has a size of 16. The matrix and offset vector of a corresponding set may be used for a 4x4-sized block. Meanwhile, Set *S*₁ consists of 10 matrices ${A}_{1}^{i} , i ∈ \left\{0,…,9\right\}$, but each matrix may have 16 rows, 8 columns and 10 offset vectors ${b}_{1}^{i} , i ∈ \left\{0,…,9\right\}$, each of which has a size of 16. The matrix and offset vector of a corresponding set may be used for 4x8, 8x4 and 8x8-sized blocks. Lastly, Set *S*₂ consists of 6 matrices ${A}_{2}^{i} , i ∈ \left\{0,…,5\right\}$, but each matrix may have 64 rows, 8 columns and 6 offset vectors ${b}_{2}^{i} , i ∈ \left\{0,…,5\right\}$, each of which has a size of 64. The matrix and offset vector of a corresponding set may be used for blocks of all other sizes other than blocks of sizes described above.

The number of multiplications required for a matrix vector product operation may always be less than or equal to 4 · W · H. In other words, in a MIP mode, up to four multiplication operations may be required for each sample.

### Entire MIP Process Outline

The overall process of averaging, matrix vector multiplication and linear interpolation is described by referring to FIGS. 7 to 11. Meanwhile, a block shape not illustrated in FIGS. 7 to 11 may also be processed as disclosed in FIGS. 7 to 11.
1. In a 4x4 block, MIP may take 2 average values according to the axis of each boundary. The resulting 4 input samples may be input to matrix vector multiplication. A matrix may be obtained from Set *S*₀. After offset addition, 16 final prediction samples may be obtained. Linear interpolation may not be necessary to generate a prediction signal. In other words, (4·16)/(4·4)=4 multiplications may be performed for each sample.
2. In a 4x4 block, MIP may take 4 average values according to the axis of each boundary. The resulting 8 input samples may be input to matrix vector multiplication. A matrix may be obtained from Set *S*₁. Accordingly, 16 samples may be obtained at the odd position of a prediction block. In other words, (8·16)/(8·8)=2 multiplications may be performed for each sample. After offset addition, these samples may be vertically interpolated by using a reduced top boundary. Horizontal interpolation may be performed by using an original left boundary. In this case, multiplication may not be required in an interpolation process. In other words, only a total of 2 multiplications per sample may be required to derive MIP prediction.
3. In a 8x4 block, MIP may take 4 original boundary values of a left boundary and 4 average values according to the horizontal axis of a boundary. The resulting 8 input samples may be input to matrix vector multiplication. A matrix may be obtained from Set S₁. Accordingly, 16 samples may be obtained at each vertical position and odd horizontal position of a prediction block. In other words, (8·16)/(8·4)=4 multiplications may be performed for each sample. After offset addition, these samples may be horizontally interpolated by using an original left boundary. In this case, a multiplication process may not be added in an interpolation process. In other words, only a total of 4 multiplications per sample may be required to derive MIP prediction. A transposed case may also be processed in this way.
4. In a 16x16 block, MIP may take 4 average values according to each axis of a boundary. The resulting 8 input samples may be input to matrix vector multiplication. A matrix may be obtained from Set *S*₂. Accordingly, 64 samples may be obtained at the odd position of a prediction block. In other words, (8·64)/(16·16)=2 multiplications may be performed for each sample. After offset addition, these samples may be vertically interpolated by using 8 average values at a top boundary. Horizontal interpolation may be performed by using an original left boundary. In this case, a multiplication process may not be added in an interpolation process. In other words, only a total of 2 multiplications per sample may be required to derive MIP prediction.

A corresponding process may also be applied basically in the same way in a larger block. In this case, it may be shown that the number of multiplications per sample is less than 4.

For a Wx8 block with W>8, only horizontal interpolation may be necessary because a sample is provided to an odd horizontal and each vertical position. In this case, (8·64)/(W·8)=64/W multiplications per sample may be performed to calculate the reduced prediction. For W=16, additional multiplication may not be required for linear interpolation, but for W>16, the number of additional multiplications per sample required for linear interpolation may be less than 2. Accordingly, the total number of multiplications per sample may be less than or equal to 4.

Lastly, for a W×4 block with W>8, it is assumed that *Aₖ* is a matrix generated by excluding all rows corresponding to an odd item according to the horizontal axis of a downsampled block. In this case, an output size is 32, and only horizontal interpolation may be performed again. (8·32)/(W·4)=64/W multiplications per sample may be performed to calculate the reduced prediction. For W=16, additional multiplication is not required, but for W>16, less than 2 multiplications per sample may be required for linear interpolation. Accordingly, the total number of multiplications may be less than or equal to 4. A transposed case may also be processed in this way.

### Boundary Averaging

FIG. 12 is a diagram representing an example of a boundary averaging process that may be applied to the present disclosure. As an example, boundary averaging may be included in a MIP process.

Averaging may be applied to each boundary (a left boundary or a top boundary) according to the averaging process. Here, a boundary may refer to a neighbor reference sample adjacent to the boundary of a current block, as described by referring to FIGS. 7 to 11. For example, a left boundary (*bdry^{left}*) may represent a left neighbor reference sample adjacent to the left boundary of a current block, and a top boundary (*bdry^{top}*) may represent a top neighbor reference sample adjacent to the top boundary of a current block. When the size of a current block is 4x4, each boundary size may be reduced to 2 samples through an averaging process. When a current block does not have a 4x4 size, each boundary size may be reduced to 4 samples through an averaging process.

In the first step, input boundaries *bdry^{top}* and *bdry^{left}* may be reduced to smaller boundaries ${bdry}_{red}^{top}$ and ${bdry}_{red}^{left}$. Here, both ${bdry}_{red}^{top}$ and ${bdry}_{red}^{left}$ may consist of 2 samples for a 4x4 block and may consist of 4 samples for all other cases.

For a 4x4 block, it may be defined as follows in 0 ≤ *i* < 2:
${bdry}_{red}^{top} \left[i\right] = \left(\left({\sum }_{j = 0}^{1} {bdry}^{top} \left[i⋅2+j\right]\right)+1\right) ≫ 1$

And, ${bdry}_{red}^{left}$ may also be defined similarly to Equation 3.

For other cases, when block width W is *W* = 4 · 2*^{k}*, it may be defined as follows in 0 ≤ *i* < 4:
${bdry}_{red}^{top} \left[i\right] = \left(\left({\sum }_{j = 0}^{{2}^{k} - 1} {bdry}^{top} \left[i⋅{2}^{k}+j\right]\right)+\left(1≪\left(k-1\right)\right)\right) ≫ k$

And, ${bdry}_{red}^{left}$ may also be defined similarly to Equation 4.

Since these two reduced boundaries ${bdry}_{red}^{top}$ and ${bdry}_{red}^{left}$ are connected to reduced boundary vector *bdry_{red},* a 4x4-shaped block may have a size of 4 and a block in other shapes may have a size of 8.

Meanwhile, when variable *mode* represents a MIP mode, the following concatenation may be defined:
${bdry}_{red} = \left\{\begin{matrix}\left[{bdry}_{red}^{top}, {bdry}_{red}^{left}\right] & for W = H = 4 and mode < 18 \\ \left[{bdry}_{red}^{left}, {bdry}_{red}^{top}\right] & for W = H = 4 and mode \geq 18 \\ \left[{bdry}_{red}^{top}, {bdry}_{red}^{left}\right] & for max \left(W, H\right) = 8 and mode < 10 \\ \left[{bdry}_{red}^{left}, {bdry}_{red}^{top}\right] & for max \left(W, H\right) = 8 and mode \geq 10 \\ \left[{bdry}_{red}^{top}, {bdry}_{red}^{left}\right] & for max \left(W, H\right) > 8 and mode < 6 \\ \left[{bdry}_{red}^{left}, {bdry}_{red}^{top}\right] & for max \left(W, H\right) > 8 and mode \geq 6 .\end{matrix}\right.$

Finally, in the interpolation of a subsampled prediction signal, for a large block, the modified version of an averaged boundary, i.e., the second version, may be further required. In other words, min(*W*, *H*) > 8 and *W* ≥ *H,* W= 8 * 2*^{l},* and in 0 ≤ *i* < 8, the following may be defined:
${bdry}_{redII}^{top} \left[i\right] = \left(\left({\sum }_{j = 0}^{{2}^{l} - 1} {bdry}^{top} \left[i⋅{2}^{l}+j\right]\right)+\left(1≪\left(l-1\right)\right)\right) ≫ l .$

When min(W, H) > 8 and H > *W,* ${bdry}_{redII}^{left}$ may also be defined similarly.

### Generation of Reduced Prediction Signal by Matrix Vector Multiplication

One reduced input vector *bdry_{red}* may generate reduced prediction signal *pred_{red}.* A reduced prediction signal may be a signal for a downsampled block with a width of *W_{red}* and a height of *H_{red}*. Here, *W_{red}* and *H_{red}* may be defined as follows: $\begin{matrix}{W}_{red} = \left\{\begin{matrix}4 & for max \left(W, H\right) \leq 8 \\ min \left(W, 8\right) & for max \left(W, H\right) > 8\end{matrix}\right. \\ {H}_{red} = \left\{\begin{matrix}4 & for max \left(W, H\right) \leq 8 \\ min \left(H, 8\right) & for max \left(W, H\right) > 8\end{matrix}\right.\end{matrix}$

Reduced prediction signal *pred_{red}* may be derived by matrix vector product calculation and offset addition. ${pred}_{red} = A ⋅ {bdry}_{red} + b .$

Here, A may be a matrix having *W_{red}* · *H_{red}* rows and 4 columns for *W = H* = 4 or 8 columns for other cases. Here, *b* may be a *W_{red}* · *H_{red}-*sized vector.

Matrix *A* and vector *b* may be obtained from one of the sets *S*₀, *S*₁, *S*₂ as follows. Index *idx* = *idx*(*W*, *H*) may be defined as follows: $idx \left(W, H\right) = \left\{\begin{matrix}0 & for W = H = 4 \\ 1 & for max \left(W, H\right) = 8 \\ 2 & for max \left(W, H\right) > 8 .\end{matrix}\right.$ In addition, m may be derived as follows: $m = \left\{\begin{matrix}mode & for W = H = 4 and mode < 18 \\ mode - 17 & for W = H = 4 and mode \geq 18 \\ mode & for max \left(W, H\right) = 8 and mode < 10 \\ mode - 9 & for max \left(W, H\right) = 8 and mode \geq 10 \\ mode & for max \left(W, H\right) > 8 and mode < 6 \\ mode - 5 & for max \left(W, H\right) > 8 and mode \geq 6 .\end{matrix}\right.$

Afterwards, in case of *idx* ≤ 1 or *idx* = 2 and min(W, H) > 4, it may be $A = {A}_{idx}^{m}$ and $b = {b}_{idx}^{m}$. When *idx* = 2 and min(*W*, *H*) = 4, for *W* = 4, *A* may correspond to the odd x-coordinate of a downsampled block or for H=4, may correspond to the odd y-coordinate of a downsampled block.

Finally, a reduced prediction signal may be substituted by a transposed signal in the following cases:

*1. W = H =* 4 and *mode* ≥ 18
2. max(*W*, *H*) = 8 and *mode* ≥ 10
3. max(*W*, *H*) > 8 and *mode* ≥ 6

*For W = H* = 4, the total number of multiplications required to calculate *pred_{red}* may be 4, and in this case, it is because *A* has 16 rows and 4 columns. For other cases, A has 8 columns and *W_{red}* · *H_{red}* rows, and in this case, it may be shown that 8 · *W_{red}* · *H_{red}* ≤ 4 · *W* · *H* multiplications are required. In other words, in this case, up to 4 multiplications per sample may be required to calculate *pred_{red}.*

### Linear Interpolation

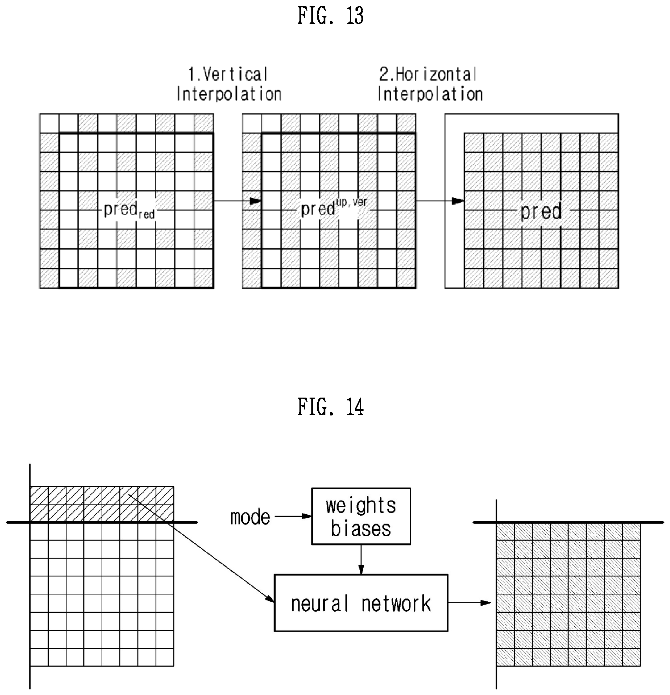

FIG. 13 is a diagram representing an example of a linear interpolation process that may be applied to the present disclosure. As an example, a linear interpolation process may be included in a MIP process. As an example, an interpolation process may be a linear interpolation or bilinear interpolation process. An interpolation process may include two steps consisting of 1) vertical interpolation and 2) horizontal interpolation as illustrated in FIG. 13. When W>=H, vertical linear interpolation may be applied first, and horizontal linear interpolation may be applied later. When W<H, horizontal linear interpolation may be applied first, and vertical linear interpolation may be applied later. In a 4x4 block, an interpolation process may be omitted.

In a *W* × *H* block with max(*W*, *H*) ≥ 8, a prediction signal may be generated by linear interpolation based on the reduced prediction signal *pred_{red} of W_{red}* × *H_{red}.* Based on a block shape, linear interpolation may be applied in vertical, horizontal or both directions. When linear interpolation is applied in both directions, it may be applied first in a horizontal direction, and for *W* < *H,* it may be applied first in a vertical direction.

It is assumed that there is a WxH block with max(*W*, *H*) ≥ 8 and *W* ≥ *H.* Here, one-dimensional linear interpolation may be performed as follows. Considering generality, linear interpolation in a vertical direction may be performed. First, a reduced prediction signal may be extended to the top by a boundary signal. A vertical upsampling factor may be defined as *Uᵥₑᵣ = H*/*H_{red},* and may be *Uᵥₑᵣ* = 2*^{uᵥₑᵣ}* > 1. In this case, an extended reduced prediction signal may be defined as follows: ${pred}_{red} \left[x\right] \left[-1\right] = \left\{\begin{matrix}{bdry}_{red}^{top} \left[x\right] & for W = 8 \\ {bdry}_{redII}^{top} \left[x\right] & for W > 8 .\end{matrix}\right.$

In this case, a vertical linear interpolation prediction signal may be generated from an extended reduced prediction signal as follows. $\begin{matrix}{pred}_{red}^{ups , ver} \left[x\right] \left[{U}_{ver}⋅y+k\right] = \left(\left({U}_{ver}-k-1\right)⋅{pred}_{red}\left[x\right]\left[y-1\right]+\left(k+1\right)⋅{pred}_{red}\left[x\right]\left[y\right]+\frac{{U}_{ver}}{2}\right) ≫ {u}_{ver} \\ for 0 ≺ x < {W}_{red} , 0 \leq y < {H}_{red} and 0 \leq k < {U}_{ver} .\end{matrix}$

### Embodiment

The present disclosure relates to intra prediction, and more specifically, relates to a technology for performing adaptive matrix-based intra prediction (MIP) under various conditions. According to an embodiment of the present disclosure, matrix-based intra prediction (MIP) may also be performed by using only a part of reference samples, and MIP may be performed adaptively based on a condition related to a reference sample or a current block, etc.

FIG. 14 is a diagram for describing an MIP prediction method that may be applied to the present disclosure. According to an example of FIG. 14, for prediction of a current block, neighboring reference samples may be used as an input to obtain the prediction values of a current block as an output through a neural network.

Meanwhile, current MIP prediction may generate a prediction block by using both left and top reference samples around a block. However, the samples of a current block may have a more biased correlation with some reference samples such as a top or left reference sample, etc., and accordingly, when prediction of a current block is performed by using a partial reference sample, higher prediction accuracy may be obtained.

Accordingly, the present disclosure proposes a method for adaptively performing MIP prediction on a reference sample area through various embodiments. In other words, the present disclosure proposes a method for performing MIP prediction by using only a part of the neighboring reference samples of a current prediction block.

In addition, the present disclosure proposes a method for adaptively performing MIP prediction based on a condition associated with a reference sample and/or a current block, etc. through various embodiments. More specifically, matters for MIP application may be determined, including that an MIP prediction result value is adaptively determined based on the size of a current block, the number of pixels of a current block and/or the value of a reference sample, etc. and that a matrix for MIP prediction is determined.

In addition, when describing various embodiments in the present disclosure, even when a singular expression such as a sample, a pixel, a pixel and a block is used, it may mean samples, pixels, pixels and blocks, and of course, it may also mean a single sample, pixel, pixel and block.

Hereinafter, the embodiment of the present disclosure will be described in detail by referring to drawings.

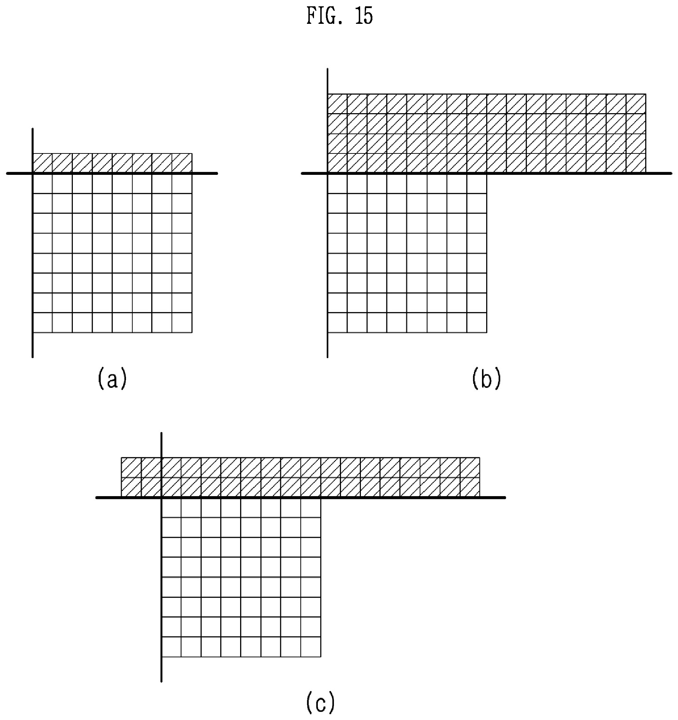

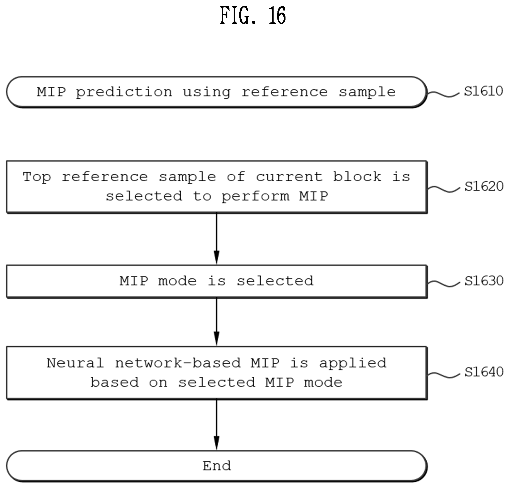

FIG. 15 is a diagram for describing a method for performing MIP prediction according to an embodiment of the present disclosure, and FIG. 16 is a diagram for describing an MIP-based image encoding or decoding method according to an embodiment of the present disclosure. In this embodiment, a method for performing MIP prediction by using only some of the reference samples of a current block will also be described by referring to various drawings including FIG. 15 and FIG. 16.

Meanwhile, an image encoding method or an image decoding method in FIG. 16 may be performed in an image encoder or an image decoder, respectively, and an image encoder and an image decoder may include an apparatus described by referring to other drawings above.

First, an MIP-based image encoding/decoding method S1610 according to an embodiment of the present disclosure may be performed. As an example, a method in S1610 may be performed based on some selected reference samples.

As an example, in order to perform MIP-based image encoding or decoding, some of the left reference samples and the top reference samples may be selected. As an example, the top reference sample of a current block may be selected S1620 to be used for performing MIP. As described above, the pixels of a current block may have a more biased correlation with some reference samples such as a top or left reference sample, etc., and accordingly, when prediction of a current block is performed by using a partial reference sample, higher prediction accuracy may be obtained. Here, according to an embodiment of the present disclosure according to FIG. 15, only a top reference sample may be selected for MIP prediction and used as an MIP prediction input. In this case, only a top reference sample may be selected as a neural network input for MIP prediction. Meanwhile, as illustrated in FIG. 15(a), a top reference sample may correspond to a sample immediately adjacent to a current block. In other words, according to an embodiment of FIG. 15(a), only a reference sample immediately on the top of a current block may be used. However, as another example, as illustrated in (b), adjacent samples which are adjacent to the top of a current block but whose number is greater than the width of a current block (e.g., further extended to the right) may be included in a top reference sample, or reference samples of a plurality of reference sample lines may be included in a top reference sample. According to an embodiment of FIG. 15(b), a plurality of lines of the top and top-right reference samples of a current block may be used. As another example, as illustrated in (c), adjacent samples which are adjacent to the top of a current block but whose number is greater than the width of a current block (e.g., further extended to the left and/or the right) may be included in a top reference sample, or reference samples of a plurality of reference sample lines may be included. According to an embodiment of FIG. 15(c), the top or top-right or top-left reference sample of a current block may be used. Meanwhile, the number of reference sample lines or the number of reference samples further extended to the left or the right is not limited to that disclosed in FIG. 15. In addition, for a method proposed in this embodiment, some samples within one or a plurality of reference sample lines may be utilized for MIP prediction, and only some areas of all top reference samples of a current block may be utilized for MIP prediction proposed in this embodiment. Meanwhile, a method for utilizing only some of the reference samples obtained through examples listed above as well as a case in which reference samples on the top and top-right of a current block are used for MIP prediction of a current block may also be included as an embodiment of the present disclosure. For example, only a reference sample derived through subsampling (here, a subsampling ratio may be random) may be used or a method for using only a reference sample divided based on a specific threshold may also be used. For example, a reference sample may be used for MIP prediction only when a reference sample value is greater than or equal to or less than or equal to a specific threshold or is within a specific range, and a specific threshold may be signaled from a bitstream or may also be derived based on another parameter (e.g., the size of a current block, etc.).

Afterwards, an MIP mode may be selected based on MIP mode information S1630. An MIP mode may be applied to a current block or may be explicitly signaled through a bitstream. Meanwhile, in an image encoder, a current step may be substituted with a step for determining MIP mode information after selecting an MIP mode.

Afterwards, neural network-based MIP may be applied based on a selected MIP mode S1640. In other words, MIP-based prediction may be performed. Meanwhile, as an example, based on a selected reference sample input, a prediction block sample value, which is an output, may be obtained through a neural network as shown in FIG. 14 and/or FIG. 15. Here, a neural network may be adaptively selected based on a reference sample input. In other words, S1640 may include a process in which MIP-based prediction is applied based on a selected input sample value and a selected neural network. As an example, a neural network consisting of one matrix may be used to perform MIP. Meanwhile, a prediction block sample value, which is an output, may be derived as follows: $pred = Clip \left(A⋅r\right)$

In the equation, r may refer to a reference sample input selected through a method proposed in this embodiment, and pred may refer to a prediction block sample value, which is an output. In other words, a prediction block sample value may be derived based on a selected reference sample value. As an example, A may refer to a trained neural network matrix, and a Clip function is a clipping function, which may be a function for restricting a bottom value and/or a top value as a function for clipping an output prediction sample (pred) value within a certain sample value range. In this case, a clipping range may be predefined. In other words, an output pred may be obtained through an operation on one matrix A for an input r. The size of matrix A may be adaptively changed according to the size of an input and an output.

Meanwhile, the configuration of a neural network for obtaining an output pred for an input r proposed in this embodiment is not limited to the example. In other words, in addition to a neural network using one simple matrix, a plurality of matrix operations may be used through the configuration of a plurality of hidden layers, and a bias term and an activation function may be used for each neural network layer.

In addition, in outputting a prediction sample, a value may be output in a frequency domain in addition to a spatial area, and in this case, inverse transform may be performed on a prediction (pred) value to obtain a final prediction sample value.

Meanwhile, as in an example above, the size of a neural network matrix that may be included in a matrix for MIP may be adaptively selected according to an input and an output. When MIP is applied to a block of a certain size or larger, the size of a matrix and the size of an input vector (e.g., r) become significantly larger, which may require significant computational complexity to an image decoding and/or encoding apparatus. Accordingly, it may be required to reduce the size of an input vector and an MIP matrix (or kernel) for coding efficiency and computational complexity. Accordingly, in an embodiment of the present disclosure, selected inputs, i.e., selected reference samples, may be sampled through a proper method such as downsampling, etc. and then used as an input for a neural network. In other words, reference samples obtained by sampling selected reference samples through downsampling at a ratio of 1:2, 1:4 or 1:8 may be used as an input for a neural network. In this case, the size of an input may be reduced, so the size of a neural network matrix may be reduced and the overall amount of MIP operations may be significantly reduced.

Meanwhile, the sampling method and ratio of reference samples selected in this example are not limited to the example, and an input may also be increased through upsampling other than downsampling. The sampling method and ratio of reference samples may also be adaptively selected according to the shape and size of a block and the number of selected reference samples. In addition, selected reference samples may also be preprocessed through a variety of filtering such as low-pass filtering, highpass filtering, etc. and then utilized as a neural network input. In addition, a selected reference sample may also be changed into a frequency domain by applying transform and then input to a neural network, and after finding the average value of selected reference samples, a residual sample value obtained by subtracting a corresponding average value from all reference samples may also be used as an input for a neural network.

Meanwhile, the filtering and sampling method of an input described above may also be applied similarly to an output. In other words, when the number of the outputs of a neural network, i.e., the number of output samples, is less than or greater than the number of prediction samples required for a current block size, an output value may be upsampled or downsampled to match the number of prediction samples required for a current block size. In addition, when transform is applied to an input and a frequency domain input is used or residual samples excluding an average value are used as an input, it may be modified in an output.

As in the method of a previous example, the number of input samples and output samples for a neural network matrix operation proposed in the present disclosure is not limited to a specific number.

In addition, post-processing filtering may also be applied to a prediction block predicted by using a method proposed in the present disclosure. A Position Dependent Intra Prediction Combination (PDPC) method may also be applied to a prediction block predicted by using a method proposed in the present disclosure. As an example, a smoothing filter may also be applied to a prediction block predicted by using a method proposed in the present invention.

Meanwhile, as an example, in configuring a neural network for a method proposed in this embodiment, the coefficients of a matrix used in an operation within a neural network may have a variety of bit precisions. As an example, when a 10-bit precision matrix operation is performed, matrix coefficients have a coefficient value range of a specific value range (e.g., 0~1023 or -512~511), an input and an output may be adaptively adjusted accordingly. These bit precision values are not limited to an example above and may be adaptively changed based on the number of layers of a neural network, etc.

Meanwhile, in a method proposed in this embodiment, the number of neural network matrix modes (the number of modes in a proposed MIP method) may be configured in various ways based on a mode (e.g., an intra mode or an inter mode, etc.), the width of an input block, the height of an input block, the number of pixels of an input block, the position of a sub-block within a block, an explicitly signaled syntax, the statistical characteristics of neighboring pixels, whether to use secondary transform, etc. For example, the number of neural network matrix modes may be adaptively selected according to the size of a current block. Alternatively, the number of neural network matrix modes may be selected equally for all block sizes.

As an example, the coefficient of a neural network matrix may be adaptively defined for all block shapes. As an example, a neural network coefficient corresponding to each block shape from 4x4 to 256x256 blocks may be defined. The number of inputs and outputs of a neural network matrix may be predetermined according to a block shape. As an example, as in the example of FIG. 15(a), MIP prediction is performed by using only one top reference sample line, and 49 types of neural network matrix corresponding to 4, 8, 16, 32, 64, 128 and 256 which are the input of a neural network matrix and 4, 8, 16, 32, 64, 128 and 256 which are the output of a neural network matrix. In addition, each of the 49 neural network matrices may have a matrix coefficient according to the number of MIP modes proposed in this embodiment. As an example, when the number of MIP modes of a neural network matrix with an input of 8 and an output of 16 (which may correspond to a 8x16 block shape) is 35, a corresponding neural network matrix may have a total of 8x16x35 matrix coefficients. Alternatively, as another example, only a neural network matrix suitable for a specific block shape may be defined, and may have a limited input and output. In this case, a neural network matrix of a specific block shape may be utilized through appropriate preprocessing or post-processing on an input and an output. As an example, when only a neural network matrix suitable for a square block shape is defined, it may correspond to the input of a corresponding square block neural network matrix through the preprocessing of a reference sample for a non-square blocks (e.g., downsampling or upsampling). An output may also correspond to the prediction value of a non-square block through post-processing (e.g., downsampling or upsampling).

Meanwhile, according to a method proposed in this embodiment, a neural network matrix mode (a mode in a proposed MIP method) may be selected based on at least one of a mode (e.g., an intra mode or an inter mode, etc.), the width of an input block, the height of an input block, the number of pixels of an input block, the position of a sub-block within a block, an explicitly signaled syntax, the statistical characteristics of neighboring pixels, whether to use secondary transform, etc. In this case, in order to transmit selected mode information to a decoder, an encoder may transmit mode information by selecting and applying a proper binary method. As an example, an encoder may set a specific mode such as the transmission of an intra luma mode as an MPM mode, and then perform binarization after setting the remaining modes separately. In this case, binarization bits may be saved through appropriate context modeling in each binarization. Alternatively, as another example, considering the total number of MIP modes, mode information may also be transmitted to a decoder by using binarization such as truncated binary/truncated unary/fixed length, etc.

Meanwhile, in order to select primary transform and secondary transform types in a prediction block predicted by a method proposed in this embodiment, a transform mode may be selected based on at least one of a neural network matrix mode, the width of an input block, the height of an input block, the number of pixels of an input block, the position of a sub-block within a block, an explicitly signaled syntax and the statistical characteristics of neighboring pixels. As an example, when selecting the primary transform type of a block to which a prediction method proposed in the present disclosure is applied, a multiple transform set (MTS) transform method may be applied. As an example, when selecting the secondary transform type of a block to which a prediction method proposed in the present disclosure is applied, a secondary transform kernel suitable for a planar intra mode may be selected.

Meanwhile, the MIP prediction mode candidate of a current block such as DIMD or TIMD may be determined to select an MIP mode proposed in this embodiment, or the MIP prediction mode of a current block may also be determined. In other words, the MIP prediction mode candidate or MIP prediction mode of a corresponding block may be inferred by utilizing a neighboring reference sample such as DIMD or TIMD.

As another example, a mode candidate inference method used in DIMD may be applied for MIP mode prediction in a method proposed in this embodiment. In other words, a pixel gradient may be calculated by using only the area of a top reference sample, and the first MIP prediction mode or the second MIP prediction mode obtained through a corresponding gradient may be set as the MIP prediction mode candidate of a current block.

As another example, a mode inference method used in TIMD may be applied for MIP mode prediction in a method proposed in this embodiment. In other words, TIMD template matching may be performed by using only the area of a top reference sample. An MIP prediction mode candidate to which TIMD template matching will be applied may be selected like an MPM or all of a plurality of MIP prediction modes may also be selected. Alternatively, only a part of an arbitrary number of a plurality of MIP prediction modes may also be selected.

Meanwhile, whether to apply a method proposed in this embodiment may be signaled as information in a VPS, an SPS, a PPS, a picture header, a slice header, DCI, etc. which are a high-level syntax (HLS). As an example, in order to determine whether to apply a method proposed in this embodiment in the unit of a PPS, information on whether to apply a method proposed in this embodiment may be included and signaled within a PPS.

Additional information on whether to apply a method proposed in this embodiment may be explicitly signaled, but as another example, a method proposed in this embodiment may be inferred or adaptively selected without additional information signaling. As an example, whether to apply a method proposed in this embodiment in the unit of a CTU or a CU may be signaled through a 1-bit flag.

As an example, a method proposed in this embodiment may be used only when an MIP mode is defined to be used in a high level syntax (HLS). In addition, whether to apply a method proposed in this embodiment may be determined by using a method in which additional information is signaled within an MIP mode. As an example, when the value of information on whether to apply MIP (e.g., an MIP flag) is a specific value (e.g., 1, true), information on whether to apply a method proposed in this embodiment may be signaled by using a 1-bit flag.

Alternatively, when a method proposed in this embodiment may be applied according to the size or shape of a specific block or whether a specific condition exists, whether to apply a method proposed in this embodiment may be signaled by using a 1-bit flag only in that case. As an example, when a block height is at least 4 times a block width, a method proposed in this embodiment may not be applied, and accordingly, the signaling of additional information on whether to apply accordingly may be omitted.

Meanwhile, as another example, under a specific condition, whether to apply a method proposed in this embodiment may be implicitly inferred. As an example, when the left reference sample of a current block does not exist such as a block existing at the left boundary of an image or when a left reference sample may not be used, signaling information on whether to apply a method proposed in this embodiment may be omitted. In addition, signaling of information on whether to apply an MIP mode may also be omitted. In this case, it may be derived that an MIP method proposed in this embodiment is always applied. When the left reference sample of a current block is a CTU boundary/a tile boundary/a slice boundary/a sub-picture boundary, signaling information on whether to apply a method proposed in this embodiment may be omitted. In addition, signaling of information on whether to apply an MIP mode may also be omitted. In this case, it may be derived that an MIP method proposed in this embodiment is always applied.

Meanwhile, as an example, as whether to apply a method proposed in this embodiment at a higher level defined in a high level syntax (HLS) is determined, whether to transmit information on the application of a method proposed in this embodiment in a coding unit may be adaptively determined. As an example, when the value of information representing whether to apply a method proposed in this embodiment which is signaled in an SPS is a specific value (e.g., 0, false) (i.e., when it represents that a method proposed in this embodiment is not used in the unit of an SPS), a method proposed in this embodiment is also not applied at a coding unit level, and the signaling of information on whether to use accordingly may not be performed.

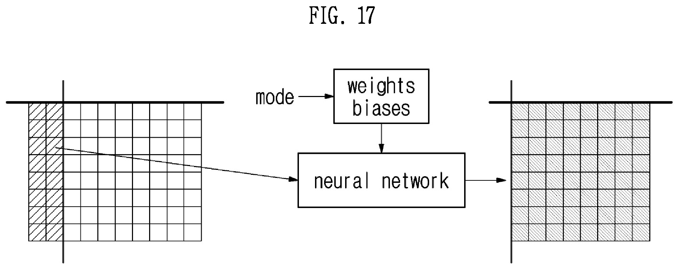

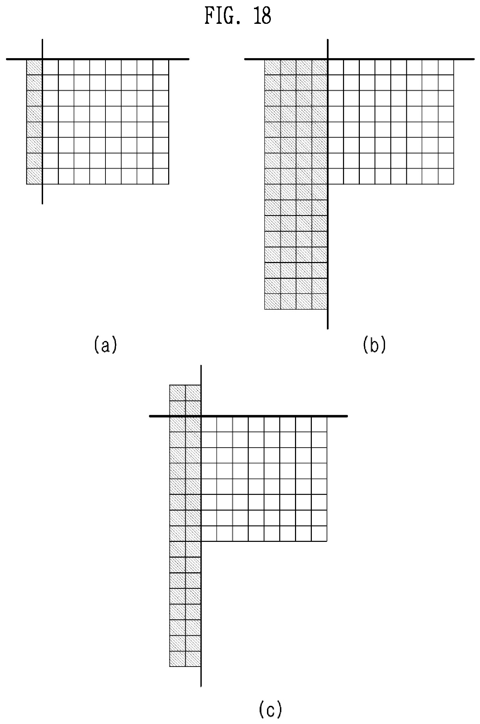

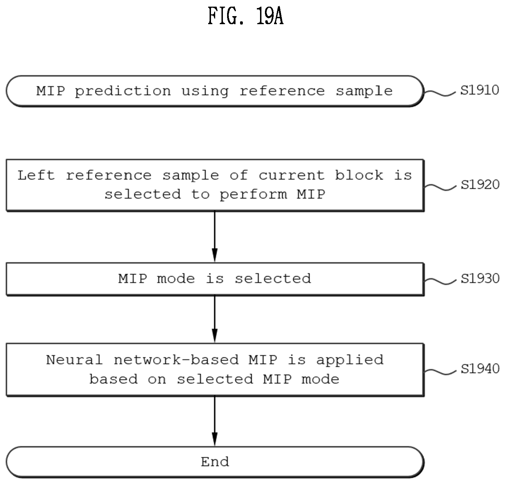

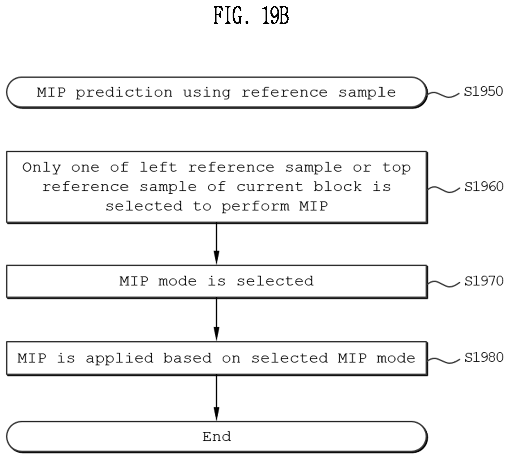

FIGS. 17 and 18 are a diagram for describing a method for performing MIP prediction according to an embodiment of the present disclosure, and FIG. 19 is a diagram for describing an MIP-based image encoding or decoding method according to an embodiment of the present disclosure. In this embodiment, a method for performing MIP prediction by using only some of the reference samples of a current block will also be described by referring to all of FIGS. 17 to 19.

Meanwhile, an image encoding method or an image decoding method in FIG. 19a and 19b may be performed in an image encoder or an image decoder, respectively, and an image encoder and an image decoder may include an apparatus described by referring to other drawings above. First, an image encoding method and/or an image decoding method in FIG. 19a is described.

First, an MIP-based image encoding/decoding method S1910 according to an embodiment of the present disclosure may be performed. As an example, a method in S1910 may be performed based on some selected reference samples.

As an example, in order to perform MIP-based image encoding or decoding, some of the left reference samples and the top reference samples may be selected. As an example, the left reference sample of a current block may be selected S1920 to be used for performing MIP.

As described above, the pixels of a current block may have a more biased correlation with some reference samples such as a top or left reference sample, etc., and accordingly, when prediction of a current block is performed by using a partial reference sample, higher prediction accuracy may be obtained. Here, according to an embodiment of the present disclosure according to FIG. 18, only a left reference sample may be selected for MIP prediction and used as an MIP prediction input. In this case, only a left reference sample may be selected as a neural network input for MIP prediction. Meanwhile, as illustrated in FIG. 18(a), a left reference sample may correspond to a sample immediately adjacent to a current block. In other words, according to an embodiment of FIG. 18(a), only a reference sample immediately on the left of a current block may be used. However, as another example, as illustrated in (b), adjacent samples which are adjacent to the left of a current block but whose number is greater than the height of a current block (e.g., further extended to the bottom) may be included in a left reference sample, or reference samples of a plurality of reference sample lines may be included in a left reference sample. According to an embodiment of FIG. 18(b), a plurality of lines of the top and bottom-left reference samples of a current block may be used. As another example, as illustrated in (c), adjacent samples which are adjacent to the left of a current block but whose number is greater than the height of a current block (e.g., further extended to the top and/or the bottom) may be included in a left reference sample, or reference samples of a plurality of reference sample lines may be included. According to an embodiment of FIG. 18(c), the left or top-left or bottom-left reference sample of a current block may be used. Meanwhile, the number of reference sample lines or the number of reference samples further extended to the top or the bottom is not limited to that disclosed in FIG. 18. In addition, for a method proposed in this embodiment, some samples within one or a plurality of reference sample lines may be utilized for MIP prediction, and only some areas of all left reference samples of a current block may be utilized for MIP prediction proposed in this embodiment. Meanwhile, a reference sample for MIP prediction may be a reference sample on the left and/or top-left of a current block or may be a reference sample obtained through an example described above. For example, only a reference sample obtained through subsampling (here, a subsampling ratio may be random) may be used or a method for using only a reference sample divided based on a specific threshold may be used. Since the description of a specific threshold is the same as described by referring to FIGS. 14, 15, 16, etc. above, an overlapping description thereof is omitted.

Afterwards, an MIP mode may be selected based on MIP mode information S1930. An MIP mode may be applied to a current block or may be explicitly signaled through a bitstream. Meanwhile, in an image encoder, a current step may be substituted with a step for determining MIP mode information after selecting an MIP mode.

Afterwards, neural network-based MIP may be applied based on a selected MIP mode S1940. In other words, MIP-based prediction may be performed. Meanwhile, as an example, based on a selected reference sample input, a prediction block sample value, which is an output, may be obtained through a neural network as shown in FIG. 14 and/or FIG. 17. Here, a neural network may be adaptively selected based on a reference sample input. In other words, S1940 may include a process in which MIP-based prediction is applied based on a selected input sample value and a selected neural network.

As an example, since an embodiment related to the configuration of a neural network, a neural network matrix, processing for the input and output of a neural network, the signaling of information associated with an embodiment and/or an MIP prediction mode, etc. is the same as described by referring to FIGS. 14, 15 and 16 above, an overlapping description is omitted.

An embodiment of an image encoding method and/or an image decoding method illustrated in FIG. 19B is described based on an embodiment described by referring to FIGS. 14 to 19a above. As an example, according to FIG. 19b, it may be determined whether to use only a reference sample located on the top of a current block based on the embodiments of FIGS. 14 to 16 or whether to use only a reference sample located on the left of a current block based on the embodiments of FIGS. 17 to 19a.

First, an MIP-based image encoding/decoding method S1950 according to an embodiment of the present disclosure may be performed. As an example, a method in S1950 may be performed based on some selected reference samples.

As an example, in order to perform MIP-based image encoding or decoding S1950, some of the left reference samples and the top reference samples may be selected. As an example, only one of the left reference sample or the top reference sample of a current block may be selected S1960 to be used for performing MIP. As an example, information on whether a top reference sample or a left reference sample will be used as a reference sample may be explicitly signaled, but may be derived by a promise between an encoder and a decoder without separate information signaling. As an example, when separate information signaling does not exist, a TIMD template matching method is used, but TIMD template matching may be performed by using only a top reference sample area, and TIMD template matching may also be performed by using only a left reference sample area. In this case, the template matching error value of each reference sample may be compared and a reference sample area with the smaller error value may be used as an input sample for MIP. In this case, the number of samples in each sample area may be different and for accurate comparison, a process in which the error value of each reference sample area is divided by the number of samples of each sample area and compared may be added.

Afterwards, an MIP mode may be selected based on MIP mode information S1970. An MIP mode may be applied to a current block or may be explicitly signaled through a bitstream. Meanwhile, in an image encoder, a current step may be substituted with a step for determining MIP mode information after selecting an MIP mode.

Afterwards, neural network-based MIP may be applied based on a selected MIP mode S1980.

Since details described in FIGS. 14 to 19a may be applied to the embodiment of FIG. 19b, an overlapping description thereof is omitted.

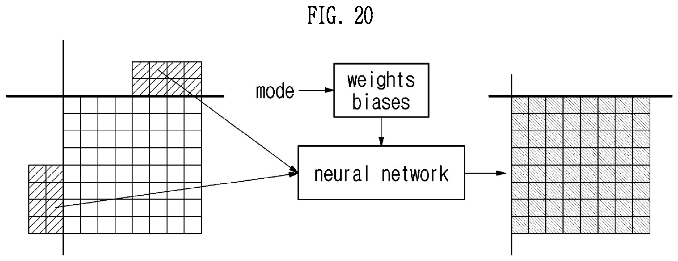

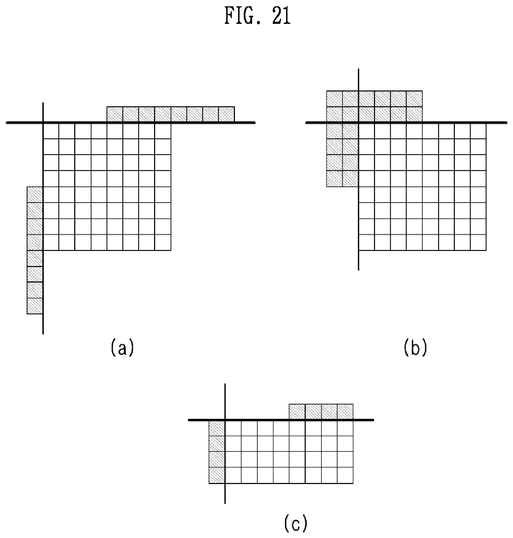

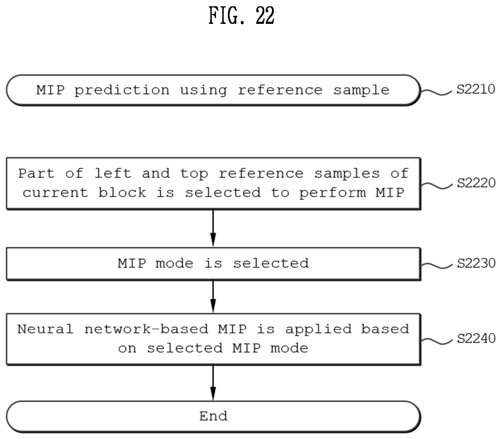

FIGS. 20 and 21 are a diagram for describing a method for performing MIP prediction according to an embodiment of the present disclosure, and FIG. 22 is a diagram for describing an MIP-based image encoding or decoding method according to an embodiment of the present disclosure. In this embodiment, a method for performing MIP prediction by using only some of the reference samples of a current block will also be described by referring to all of FIGS. 20, 21 and 22.

Meanwhile, an image encoding method or an image decoding method in FIG. 22 may be performed in an image encoder or an image decoder, respectively, and an image encoder and an image decoder may include an apparatus described by referring to other drawings above.

First, an MIP-based image encoding/decoding method S2210 according to an embodiment of the present disclosure may be performed. As an example, a method in S2210 may be performed based on some selected reference samples.

As an example, in order to perform MIP-based image encoding or decoding, some of the left reference samples and the top reference samples may be selected. As an example, some of the left and top reference samples of a current block may be selected S2220 to be used for performing MIP. In other words, in the embodiment of FIGS. 20 and 21, a partial or extended left reference sample and a partial or extended top reference sample may be selected and used. As described above, the pixels of a current block may have a biased correlation with some reference samples such as a top or left reference sample, etc., and accordingly, when prediction of a current block is performed by using a partial or extended reference sample, higher prediction accuracy may be obtained. Here, according to an embodiment of the present disclosure according to FIG. 21, a partial or extended reference sample among the adjacent reference samples existing on the left or the top may be selected for MIP prediction and used as an MIP prediction input. In this case, a partial left reference sample and a partial top reference sample may be selected as a neural network input for MIP prediction. Meanwhile, as illustrated in FIG. 21(a), a left reference sample and a top reference sample may correspond to a sample immediately adjacent to a current block. In other words, according to an embodiment of FIG. 21(a), only a reference sample immediately on the left of a current block may be used, or only a reference sample immediately on the top of a current block may be used. In other words, only a reference sample adjacent to a current block may be used. However, as shown in FIG. 21(a), a reference sample immediately adjacent to a current block is used, but a block located on the top of a left reference sample corresponding to the height of a current block is excluded, and a left reference sample further extended to the bottom may be included in a reference sample. In addition, as shown in FIG. 21(a), a reference sample immediately adjacent to a current block is used, but a block located on the left of a top reference sample corresponding to the width of a current block is excluded, and a top reference sample further extended to the right may be included in a reference sample. However, as another example, as shown in FIG. 21(b), adjacent reference samples which are adjacent to the left of a current block but whose number is less than the number of samples corresponding to the height of a current block may be included in a left reference sample, or reference samples of a plurality of reference sample lines may be included in a left reference sample. In addition, as shown in FIG. 21(b), adjacent reference samples which are adjacent to the top of a current block but whose number is less than the number of samples corresponding to the width of a current block may be included in a top reference sample, or reference samples of a plurality of reference sample lines may be included in a top reference sample. In addition, a sample located on the top-left of a current block may be further included in a reference sample. In other words, a reference sample further extended to the left from a top reference sample or a reference sample further extended to the top from a left reference sample may be further selected. According to an embodiment of FIG. 21(b), a plurality of lines of the left, top and/or top-left reference samples of a current block may be used. Meanwhile, as another example, as shown in (c), the left reference sample of a current block may include a reference sample corresponding to the height of a current block, while a top reference sample may include only a smaller number of adjacent samples than reference samples corresponding to the width of a current block. In other words, only some of the top adjacent reference samples may be included in a top reference sample.

Meanwhile, the number of reference samples further extended to the top or the bottom or the number of reference sample lines is not limited to that disclosed in FIG. 21. In addition, for a method proposed in this embodiment, some samples within one or a plurality of reference sample lines may be utilized for MIP prediction, and only some areas of all left reference samples or top reference samples of a current block may be utilized for MIP prediction proposed in this embodiment.

Afterwards, an MIP mode may be selected based on MIP mode information S2230. An MIP mode may be applied to a current block or may be explicitly signaled through a bitstream. Meanwhile, in an image encoder, a current step may be substituted with a step for determining MIP mode information after selecting an MIP mode.

Afterwards, neural network-based MIP may be applied based on a selected MIP mode S2240. In other words, MIP-based prediction may be performed. Meanwhile, as an example, based on a selected reference sample input, a prediction block sample value, which is an output, may be obtained through a neural network as shown in FIG. 14 and/or FIG. 20. Here, a neural network may be adaptively selected based on a reference sample input. In other words, S2240 may include a process in which MIP-based prediction is applied based on a selected input sample value and a selected neural network. As an example, since an embodiment related to the configuration of a neural network, a neural network matrix, processing for the input and output of a neural network, the signaling of information associated with an embodiment and/or an MIP prediction mode, etc. is the same as described by referring to FIGS. 14, 15, 16, 17, 18, 19a, 19b, 20 and 21 above, an overlapping description is omitted.

Meanwhile, additional information (e.g., 2 bits) may be signaled, and corresponding information may determine which of the embodiments of FIGS. 14 to 19B above will be used. Alternatively, which of the methods proposed in this embodiment will be applied may be determined by a promise between an encoder and a decoder without signaling. For example, a mode inference method used in TIMD may be applied. In other words, TIMD template matching may be performed by using only a top reference sample area or TIMD template matching may also be performed by using only a left reference sample. TIMD template matching may also be performed by using only some top reference samples and/or some bottom reference sample areas. In addition, a reference sample area with the smaller error value may become an MIP input by comparing the template matching error value of each reference sample. In this case, the number of samples in each sample area may be different and for accurate comparison, a process in which the error value of each reference sample area is divided by the number of samples of each sample area and compared may be added.

Meanwhile, information related to MIP according to an embodiment of the present disclosure may be signaled. Information that may be signaled by referring to an exemplary table is described below, but the name and order of information described may be changed and may be signaled at a variety of levels (e.g., Sequence Parameter Set (SPS), Picture Parameter Set (PPS), Slice Header, Picture Header, Coding Unit (CU), Prediction Unit (PU), etc.).

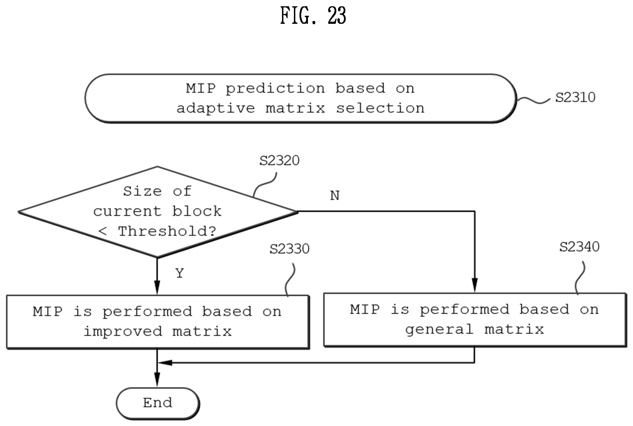

FIG. 23 is a diagram for describing an image encoding method or an image decoding method that may be performed by an image encoding apparatus or an image decoding apparatus, etc. according to an embodiment of the present disclosure.

As an example, according to an embodiment of FIG. 23, MIP based on adaptive matrix selection may be performed S2310. Hereinafter, a method for adaptively selecting and applying a neural network matrix that may be applied during MIP prediction, i.e., a neural network matrix, is proposed.

To perform S2310, first, the block size of a current block to which MIP prediction may be applied may be compared with a specific threshold S2320. As an example, for example, MIP prediction may be performed by using a neural network composed of one matrix, as in Equation 12 above. In Equation 12 above, r is a reference sample, which refers to a reference sample which becomes an input, and pred may refer to a prediction block sample value which is an output. A may refer to a trained neural network matrix and a Clip function may refer to a function that adjusts within a certain range, i.e., clips an output prediction value pred. In other words, an output pred may be obtained through one matrix operation for an input r. In this case, the size of a matrix, i.e., A, may be changed according to the size of an input and an output. An embodiment of the present disclosure proposes a method for adaptively selecting and applying a neural network matrix applied during MIP prediction, i.e., A in the example of Equation 12 above. As an example, a neural network matrix may be adaptively selected when a specific condition below is satisfied.

- Example 1: When the size of a block or the number of pixels of a block on which MIP prediction will be performed is less than or equal to or greater than or equal to a specific size, a neural network matrix that does not apply sampling (e.g., downsampling and/or upsampling) to an input (r) and an output (pred) may be applied. In other cases, a neural network matrix that applies sampling to an input and an output may be applied.

- Example 2: When the size of a block or the number of pixels on which MIP prediction will be performed is less than or equal to or greater than or equal to a specific size, a more sophisticated and complicated neural network matrix may be applied. A sophisticated neural network matrix may also include a matrix capable of processing a larger number of inputs and generating an output, a matrix with a large number of matrix factors, a matrix that requires an additional process to derive one matrix A even when using a corresponding matrix, etc. Meanwhile, in other cases, i.e., when a block size is greater than or equal to or less than or equal to a specific size, a relatively simple neural network matrix may be used.

In the embodiment of FIG. 23, when the size of a block is less than or equal to a specific threshold, an enhanced matrix may be used for MIP S2330. On the other hand, when the size of a block is greater than or equal to a specific threshold, a relatively simple or general matrix may be used for MIP S2340. However, the present disclosure is not limited to FIG. 23, and the opposite case of FIG. 23 or other criteria described above may also be used to select an MIP matrix, which is also included in the present disclosure.

Meanwhile, in the example, the size of a current block may refer to the width of a current block (the number of horizontal pixels (block width)) or the height of a current block (the number of vertical pixels (block height)) or may be defined as the number of pixels within a current block. In addition, as an example, whether to apply sampling (e.g., downsampling or upsampling) or a factor value may be determined by considering a case in which the size of a block is greater than or less than a threshold.

As an example, even when the size of a current block is less than or equal to a specific size (e.g., 8x8), the size of a block may be relatively large compared to a block with a significant change in the distribution of pixel values adjacent to a current block, so a neural network matrix that does not apply sampling to an input and an output may be used for MIP. In other words, for a block of a specific size (e.g., 4x4, 4x8, 8x4, 8x8, etc.), sampling may not be applied to an input and an output. In this case, a neural network matrix corresponding to a block of a corresponding size (e.g., 4x4, 4x8, 8x4, 8x8 blocks, etc.) may be required.

As an example, when it is assumed that MIP prediction is performed by using only a top reference sample as in the embodiment of the present disclosure described by referring to FIGS. 14 to 16 and FIG. 19B above and the size of a current block is 8x8, 8 inputs and 64 outputs may be required. In addition, an 8x64-sized neural network matrix corresponding thereto may be required.

As an example, when the number of pixels within a block is less than or equal to a specific value (e.g., 128), a neural network matrix that does not apply sampling to an input and an output may be used for MIP. In other words, for a block of a specific size (e.g., 4x4, 4x8, 4x16, 4x32, 8x4, 8x8, 8x16, 16x4, 16x8, 32x4, etc.), sampling may not be applied to an input and an output and a matrix corresponding to a specific size may be required.

As an example, when it is assumed that MIP prediction is performed by using only a left reference sample as in the embodiment of the present disclosure described by referring to FIGS. 17 to 19B above and the size of a current block is 8x16, 16 inputs and 128 outputs may be required. In addition, a 16x128-sized neural network matrix corresponding thereto may be required.

Meanwhile, when a method proposed in this embodiment is applied, MIP prediction performance improvement in a small block may be expected. In addition, as a block size becomes relatively larger, a required neural network matrix factor, i.e., a neural network matrix coefficient, increases exponentially, so when a method proposed in this embodiment is applied, an increase in neural network matrix coefficient data may be efficiently suppressed, thereby reducing computational complexity and improving coding efficiency and quality.

Meanwhile, in the present disclosure, the configuration of a matrix for obtaining an output pred for an input r proposed in some embodiments is not limited to the example. In other words, in addition to a neural network using one simple matrix, a plurality of matrix operations may be used through the configuration of a plurality of hidden layers, and a bias term and/or an activation function, etc. may be used for each neural network layer. In addition, a frequency domain value other than a spatial area may be selected as an output, and in this case, final prediction sample values may also be obtained by performing inverse transform on a prediction value which is an output, i.e., a pred value.

As in a previous example, the size of a neural network matrix may be adaptively selected according to an input and an output. In this embodiment, input values selected through a method proposed in a previous example, i.e., selected reference samples, may be sampled and used as a neural network input. In other words, as described above, sampling at a specific ratio (e.g., 1:2, 1:4, or 1:8 ratio, etc.) may be performed on selected reference samples. In this example, the sampling method and ratio of selected reference samples are not limited to the example, and an input may be increased or decreased through sampling, and the sampling method and ratio of reference samples may also be adaptively selected according to the shape and size of a block and the number of selected reference samples. In addition, as described above, selected reference samples may be preprocessed through a variety of filtering and utilized as the input of a neural network. In addition, a value changed to a frequency domain by applying transform to a selected reference sample may be used as a matrix input or a residual sample value, etc. may be used as an input, which is the same as described above, so an overlapping description is omitted.

The filtering and sampling methods of an input described above may be applied similarly to an output. In addition, when the input of a frequency domain is used or residual samples are used as an input, it may be modified from an output, which is the same as described above, so an overlapping description is omitted.

As in the method of a previous example, the number of input samples and output samples for a matrix operation is not limited to a specific number.

In addition, as described above, post-processing filtering may also be applied to a predicted prediction block. Since it is the same as described above, an overlapping description is omitted.

Moreover, as described above, in configuring a neural network, matrix factors, i.e., coefficients, may have various bit precisions. Since it is the same as described above, an overlapping description is omitted.

Meanwhile, as described above, the number of MIP prediction modes may be configured in various ways based on a prediction mode (e.g., an intra mode, an inter mode, etc.), the width of an input block, the height of an input block, the number of pixels of an input block, the position of a sub-block within a block, an explicitly signaled syntax, the statistical characteristics of neighboring pixels, whether to use secondary transform, etc., and based on this, may be selected as a specific prediction mode. As an example, the number of MIP prediction modes may be adaptively selected according to the size of a current block. Alternatively, the number of neural network matrix modes, i.e., MIP prediction modes, may be the same equally for the sizes of all blocks. Since it is the same as described above, an overlapping description is omitted.

Meanwhile, an encoder may transmit mode information after applying and binarizing a proper binary method in order to transmit selected mode information to a decoder. Since it is the same as described above, an overlapping description is omitted.

In addition, since primary transform and secondary transform type selection, MIP mode selection (e.g., based on TIMD or DIMD, etc.), signaling of related information (e.g., an HLS, etc.) and/or derivation of related information, etc. in a prediction block predicted by a method proposed in this embodiment are the same as described above, an overlapping description is omitted.

Meanwhile, in the embodiment of FIG. 23, when a block size is less than or equal to a specific threshold, an enhanced matrix is used for MIP, but the present disclosure is not limited thereto, and the opposite case in which an enhanced matrix is used for MIP when a block size is greater than or equal to a specific threshold is also possible, which is also included in the embodiment of the present disclosure.

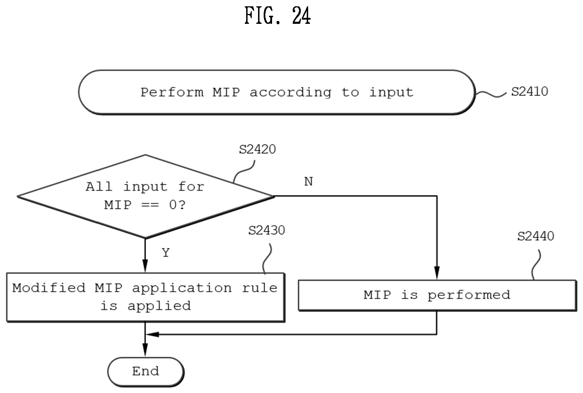

FIG. 24 is a diagram for describing an image encoding method or an image decoding method that may be performed by an image encoding apparatus or an image decoding apparatus according to an embodiment of the present disclosure. In this embodiment, an adaptive MIP method for a specific input is proposed during MIP prediction.

As an example, according to an embodiment of FIG. 24, whether MIP will actually be performed may be further determined S2410 according to a specific input regardless of whether MIP is allowed and/or applied. In other words, even when it is determined to allow and/or apply MIP according to other information or other parameters, a method is proposed in which MIP is not performed actually and an output is limited to a specific value when an MIP input satisfies a specific condition.

To perform S2410, first, a comparison on an input for MIP prediction (e.g., an input) may be performed based on a reference sample for MIP prediction S2420. As an example, whether all inputs are 0 may be determined. Meanwhile, prior to S2420, a process may be performed in which a reference sample is selected and an input for MIP (e.g., an input vector) is determined.

As an example, as described above, MIP prediction may be performed by using a neural network composed of one matrix as in Equation 12, and a method for adaptively performing MIP prediction when an input r is used for prediction is proposed.
- Example 1: When all reference sample values selected for MIP prediction are the same or when all inputs for MIP prediction are a specific value (e.g., 0) (e.g., when all input vectors are 0), the multiplication result of an input and a matrix (e.g., matrix A in Equation 12) is always a specific value (e.g., 0), so MIP prediction may be omitted without performing an unnecessary complex matrix multiplication operation. In this case, all outputs may be set as a specific value k. Here, a value of k may be adaptively changed according to a current MIP mode or other parameters. As an example, when all inputs for MIP prediction are 0, an output may be calculated through Equation 13 below. $output = \left(1≪bitdepth\right) \times \left(mode_num\right) / \left(max_mode_num\right)$

In Equation 13, output may refer to an output, bitdepth may refer to information related to a bit depth, mode_num may refer to the number of a current MIP mode and max_mode_num may refer to the total number of MIP modes.

As an example, when all MIP inputs of a 16x16 block are 0, bitdepth is 10, MIP modes 0 to 6 exist (max_mode_num = 6) and a current MIP mode is no.3 (mode_num = 3), an output value obtained by applying an equation in the example becomes 512.
- Example 2: When all reference sample values selected for MIP prediction are the same or when all inputs for MIP prediction are a specific value (e.g., if 0, all input vectors are 0), MIP prediction may be performed after setting the first value of an input as in the following equation. $input \left[0\right] = \begin{matrix}A - ref \left[0\right] & \\ input \left[x\right] = 0 , & x > 0\end{matrix}$

In Equation 14 above, input[x] may refer to the xth value of an input (e.g., an input vector), bitdepth may refer to the bit depth of an input pixel value and ref[0] may refer to the first value of a reference sample selected for MIP. A value of A may refer to a preset specific value, and according to Equation 14, MIP prediction may be performed after substituting an initial input with another value, not 0. A value of A may be a predefined value, or, as an example, may be fixed to a (1 ≪ (bitdepth-1) ) value or may be adaptively changed based on a current MIP mode or other parameters.
- Example 3: When all reference sample values selected for MIP prediction are the same or when all inputs for MIP prediction are a specific value (e.g., if 0, all input vectors are 0), all outputs are set as a specific value k. In addition, in this case, an MIP mode is limited to one, and additional MIP mode signaling may be omitted. As an example, an output k may be selected as the average of selected reference sample values or may be set identically as in other examples (e.g., Example 1 or Example 2, etc.). In addition, in this example, since an MIP mode is unified into one, signaling of additional information on a mode may be omitted.

In the embodiment of FIG. 24, when all inputs of MIP prediction are 0, an MIP application rule based on examples described above may be applied S2430. In other words, when an MIP prediction input is 0, MIP is not performed and an output may be determined as a specific value. On the other hand, MIP based on another embodiment described above may be applied S2440, which may be one of the embodiments of MIP described by referring to FIGS. 14 to 23, etc. above.

However, the present disclosure is limited to FIG. 24, and other criteria for an input may also be used to determine whether to perform MIP, which is also included in the present disclosure.

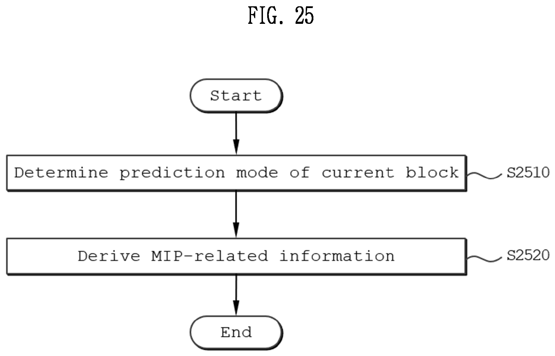

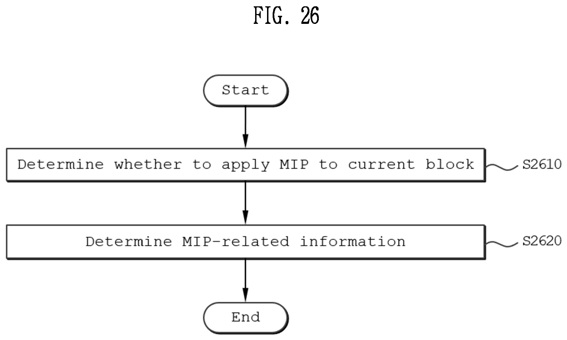

Hereinafter, an image decoding method that may be performed by an image decoding apparatus (decoder) according to an embodiment of the present disclosure and an image encoding method that may be performed by an image encoding apparatus (encoder) are described by referring to FIGS. 25 and 26. As an example, since FIGS. 25 and 26 may be based on an embodiment described by referring to FIGS. 14 to 24 above, a description that overlaps with the description of the embodiment is omitted below.

FIG. 25 is a diagram representing an image decoding method that may be performed by an image decoding apparatus (decoder) according to an embodiment of the present disclosure.

As an example, in an image decoding method performed by an image decoding apparatus, the prediction mode of a current block may be determined S2510 and a corresponding step may include whether an intra prediction mode or an inter prediction mode is applied to a current block, etc.

Based on a prediction mode applied to a current block being an intra prediction mode, information related to matrix-based intra prediction (MIP) may be derived S2520. A corresponding step may include determining whether to allow MIP, whether to apply MIP, etc., and when it is determined that MIP is applied, it may include the process of deriving information related to MIP to be applied.

Meanwhile, as an example, MIP may be applied based on the size of a current block or the number of pixels included in a current block. More specifically, a matrix for MIP may be determined based on the size of a current block or the number of pixels included in a current block. Meanwhile, when it is determined that MIP is applied to a current block based on information related to MIP, the value of the prediction block of a current block may be limited to a specific value based on a specific condition, and a specific condition may be based on the reference sample value of the current block for MIP. As an example, when a specific condition is satisfied, MIP application to a current block may be omitted regardless of information related to MIP. Meanwhile, when it is determined that MIP is applied to a current block based on information related to MIP, the prediction block of a current block may be generated by using only the top reference sample or left reference sample of a current block. Meanwhile, the top-right reference sample of a current block may be included in a top reference sample and the bottom-left reference sample of the current block may be included in a left reference sample. As another example, the prediction block of a current block is generated by using a part of the left reference sample and/or a part of the top reference sample of a current block, but at least one of a left reference sample or a top reference sample may be partially adjacent to a current block. Meanwhile, when it is determined that MIP is applied to a current block based on information related to MIP, the position of the reference sample of a current block is determined, but the position of the reference sample of a current block may be derived based on information signaled from a bitstream.

Meanwhile, since FIG. 25 corresponds to an embodiment of the present disclosure, some steps may be changed, or the order of some steps may be changed, or some steps may be deleted or performed simultaneously, and it is obvious that it is also included in an embodiment of the present disclosure.

FIG. 26 is a diagram representing an image encoding method that may be performed by an image encoding apparatus according to an embodiment of the present disclosure.

According to an image encoding method that may be performed by an image encoding apparatus according to an embodiment of the present disclosure, whether to apply matrix-based intra prediction (MIP) to a current block may be determined S2610. Prior to the current S2610, the process of determining which prediction mode (e.g., an intra prediction mode or an inter prediction mode) is applied to a current block may be performed. Afterwards, the step of determining information related to MIP S2620 may be performed.

Meanwhile, as described above, MIP may be applied based on the size of a current block or the number of pixels included in a current block, and more specifically, a matrix for MIP may be determined based on the size of a current block or the number of pixels included in a current block. Meanwhile, when it is determined that MIP is applied to a current block, the value of the prediction block of a current block may be limited to a specific value based on a specific condition, and a specific condition may be based on the reference sample value of a current block for MIP. As an example, when a specific condition is satisfied, MIP application to a current block may be omitted regardless of whether MIP is applied. Meanwhile, when it is determined that MIP is applied to a current block, the prediction block of a current block may be generated by using only the top reference sample or left reference sample of a current block. Meanwhile, the top-right reference sample of a current block may be included in a top reference sample and the bottom-left reference sample of the current block may be included in a left reference sample. As another example, the prediction block of a current block is generated by using a part of the left reference sample and/or a part of the top reference sample of a current block, but at least one of a left reference sample or a top reference sample may be partially adjacent to a current block. Meanwhile, when it is determined that MIP is applied to a current block, the position of the reference sample of a current block is determined, but information on the position of the reference sample of a current block may be encoded and signaled to a bitstream.

Meanwhile, as an example, a bitstream generated by an image encoding method may be stored in a non-transitory computer-readable medium.

In addition, as an example, a method for transmitting a bitstream generated by an image encoding method may be proposed.

Meanwhile, since FIG. 26 corresponds to an embodiment of the present disclosure, some steps may be changed, or the order of some steps may be changed, or some steps may be deleted or performed simultaneously, and it is obvious that it is also included in an embodiment of the present disclosure.

The exemplary methods of the present disclosure are described as a series of operations for clarity of explanation, but this is not intended to limit the order in which the steps are performed, and when necessary, each step may be performed simultaneously or in a different order. To implement the method according to the present disclosure, additional steps may be included in addition to the illustrated steps, some steps may be omitted while including the remaining steps, or some steps may be omitted while including additional steps.

In the present disclosure, the image encoding apparatus or the image decoding apparatus which performs a predetermined operation (step) may perform an operation (step) to check the execution conditions or situations of the corresponding operation (step). For example, when it is described that a predetermined operation is performed when a predetermined condition is satisfied, the image encoding apparatus or the image decoding apparatus may perform an operation to check whether the predetermined condition is satisfied before performing the predetermined operation.

The various embodiments of the present disclosure are not a listing of all possible combinations but are provided to illustrate representative aspects of the disclosure, and the elements described in the various embodiments may be applied independently or in combination with two or more elements.

Additionally, the various embodiments of the present disclosure may be implemented using hardware, firmware, software, or a combination thereof, etc. When implemented in hardware, the various embodiments may be implemented using one or more Application-Specific Integrated Circuits (ASICs), Digital Signal Processors (DSPs), Digital Signal Processing Devices (DSPDs), Programmable Logic Devices (PLDs), Field Programmable Gate Arrays (FPGAs), general-purpose processors, controllers, microcontrollers, or microprocessors.

Additionally, the image decoding apparatus and the image encoding apparatus to which the embodiments of the present disclosure are applied may be included in various devices such as a multimedia broadcasting transmission/reception device, a mobile communication terminal, a home cinema video device, a digital cinema video device, a surveillance camera, a video conferencing device, a real-time communication device such as a video communication device, a mobile streaming device, a storage medium, a camcorder, a video-on-demand (VoD) service providing device, an over-the-top (OTT) video device, an internet streaming service providing device, a three-dimensional (3D) video device, a video telephony device, and a medical video device, and may be used for processing video signals or data signals. For example, an over the top (OTT) video device may include a game console, a Blu-ray player, an internet-connected TV, a home theater system, a smartphone, a tablet PC, and a digital video recorder (DVR), etc.

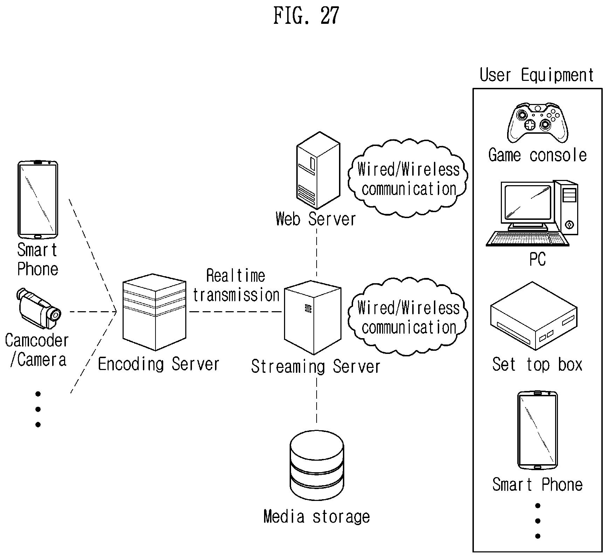

FIG. 27 shows an exemplary diagram of a content streaming system to which an embodiment of the present disclosure may be applied.

As shown in FIG. 27, the content streaming system to which an embodiment of the present disclosure is applied may broadly include an encoding server, a streaming server, a web server, a media storage, a user device, and a multimedia input device.

The encoding server compresses content input from multimedia input devices such as a smartphone, camera, or camcorder into digital data, generating a bitstream and transmitting it to the streaming server. As another example, when multimedia input devices such as a smartphone, camera, or camcorder directly generate a bitstream, the encoding server may be omitted.

The bitstream may be generated by the video encoding method and/or the image encoding apparatus to which an embodiment of the present disclosure is applied, and the streaming server may temporarily store the bitstream during the process of transmitting or receiving the bitstream.

The streaming server may transmit multimedia data to a user device based on a user request through the web server, and the web server may serve as an intermediary that informs user of available service. When a user requests a desired service from the web server, the web server may send the request to the streaming server, and the streaming server may transmit the multimedia data to the user. In this case, the content streaming system may include a separate control server, and in this case, a control server may function to control command/response exchanges between devices within the content streaming system.

The streaming server may receive content from a media storage and/or an encoding server. For example, when receiving content from the encoding server, the content may be received in real time. In this case, to provide a seamless streaming service, the streaming server may store the bitstream for a certain period of time.

Examples of the user device may include a mobile phone, a smartphone, a laptop computer, a digital broadcasting terminal, a personal digital assistant (PDA), a portable multimedia player (PMP), a navigation device, a slate PC, a tablet PC, an ultrabook, a wearable device (i.e., a smartwatch, a smart glass, a head-mounted display (HMD)), a digital TV, a desktop computer, and digital signage.

Each server within the content streaming system may be operated as a distributed server, in which case the data received by each server may be processed in a distributed manner.

The range of the present disclosure includes software or machine-executable instructions (i.e., an operating system, an application, firmware, a program, etc.) that enable operations according to the methods of various embodiments to be executed on a device or computer, and a non-transitory computer-readable medium in which such software or instructions are stored and executable on a device or computer.

### [Industrial Availability]

The embodiments of the present disclosure may be used for encoding/decoding an image.

## Claims

1. An image decoding method performed by an image decoding apparatus, comprising:
determining a prediction mode of a current block; and
based on the prediction mode being an intra prediction mode, deriving information related to matrix-based intra prediction (MIP),
wherein the MIP is applied based on a size of the current block or a number of pixels included in the current block.

2. The method of claim 1, wherein a matrix for the MIP is determined based on the size of the current block or the number of pixels included in the current block.

3. The method of claim 1, wherein when it is determined that the MIP is applied to the current block based on the information related to the MIP, a value of a prediction block of the current block is limited to a specific value based on a specific condition.

4. The method of claim 3, wherein the specific condition is based on a reference sample value of the current block for the MIP.

5. The method of claim 4, wherein when the specific condition is satisfied, application of the MIP to the current block is omitted regardless of the information related to the MIP.

6. The method of claim 1, wherein when it is determined that the MIP is applied to the current block based on the information related to the MIP, a prediction block of the current block is generated by using only a top reference sample of the current block.

7. The method of claim 6, wherein a top-right reference sample of the current block is included in the top reference sample.

8. The method of claim 1, wherein when it is determined that the MIP is applied to the current block based on the information related to the MIP, a prediction block of the current block is generated by using only a left reference sample of the current block.

9. The method of claim 8, wherein a bottom-left reference sample of the current block is included in the left reference sample.

10. The method of claim 1, wherein a prediction block of the current block is generated by using a part of the top reference sample and the left reference sample of the current block, and
wherein at least one of the left reference sample or the top reference sample is partially adjacent to the current block.

11. The method of claim 1, wherein when it is determined that the MIP is applied to the current block based on the information related to the MIP, a position of a reference sample of the current block is determined, and
wherein the position of the reference sample of the current block is derived based on information signaled from a bitstream.

12. An image encoding method, comprising:
determining whether to apply matrix-based intra prediction (MIP) to a current block; and
determining information related to the MIP,
wherein the MIP is applied based on a size of the current block or a number of pixels included in the current block.

13. A non-transitory computer-readable medium storing a bitstream generated by an image encoding method, the image encoding method comprising:
determining whether to apply matrix-based intra prediction (MIP) to a current block; and
determining information related to the MIP,
wherein the MIP is applied based on a size of the current block or a number of pixels included in the current block.

14. A method for transmitting a bitstream, comprising:
transmitting a bitstream generated by an image encoding method,
wherein the image encoding method comprises:
determining whether to apply matrix-based intra prediction (MIP) to a current block; and
determining information related to the MIP, and
wherein the MIP is applied based on a size of the current block or a number of pixels included in the current block.
